# FASCICULE DE BREVET EUROPEEN

(11) **EP 3 740 309 B1**
(45) Date de publication et mention de la délivrance du brevet: **15.03.2023**
(21) Numéro de dépôt: 19700010.2
(22) Date de dépôt: 02.01.2019
(51) Int. Cl.: B01J 23/755, B01J 35/10, B01J 37/04, C10G 45/60, C10G 45/32, C10G 45/36, C10G 45/48

(54) **PROCEDE DE PREPARATION D'UN CATALYSEUR PARTICULIER D'HYDROGENATION SELECTIVE ET D'HYDROGENATION DES AROMATIQUES PAR MALAXAGE**
VERFAHREN ZUR HERSTELLUNG EINES SPEZIFISCHEN KATALYSATORS ZUR SELEKTIVEN HYDRIERUNG UND HYDRIERUNG AROMATISCHER VERBINDUNGEN DURCH KNETEN
PROCESS FOR PREPARATION OF A SPECIFIC CATALYST FOR SELECTIVE HYDROGENATION AND HYDROGENATION OF AROMATIC COMPOUNDS BY KNEADING

(30) Priorité: 15.01.2018 FR 1850280
(43) Date de publication de la demande: 25.11.2020
(73) Titulaire: IFP Energies nouvelles, 92852 Rueil-Malmaison (FR)
(72) Inventeur: BOUALLEG, Malika, 69100 VILLEURBANNE (FR); DUBREUIL, Anne-Claire, 69003 LYON (FR)
(74) Mandataire: IFP Energies nouvelles
(86) Numéro de dépôt international: PCT/EP2019/050025
(87) Numéro de publication internationale: WO 2019/137836

(56) Documents cités:
- FR-A1- 2 963 344
- FR-A1- 2 984 761
- FR-A1- 3 022 160
- FR-A1- 3 022 161
- FR-A1- 3 022 162

## Description

### Domaine technique

L'invention a pour objet un procédé de préparation particulier d'un catalyseur utilisé en hydrogénation sélective de composés polyinsaturés dans une charge hydrocarbonée, notamment dans les coupes C2-C5 de vapocraquage et les essences de vapocraquage, ou en hydrogénation d'au moins un composé aromatique ou polyaromatique contenu dans une charge hydrocarbonée permettant la transformation des composés aromatiques de coupes pétrolières ou pétrochimiques par conversion des noyaux aromatiques en noyaux naphténiques.

### Etat de la technique

Les catalyseurs les plus actifs dans des réactions d'hydrogénation sont classiquement à base de métaux nobles tels que le palladium ou le platine. Ces catalyseurs sont utilisés industriellement en raffinage et en pétrochimie pour la purification de certaines coupes pétrolières par hydrogénation, notamment dans des réactions d'hydrogénation sélective de molécules polyinsaturées telles que les dioléfines, les acétyléniques ou les alcénylaromatiques, ou dans des réactions d'hydrogénation d'aromatiques. Il est souvent proposé de substituer le palladium par le nickel, métal moins actif que le palladium. Il est donc nécessaire de le disposer en plus grande quantité dans le catalyseur. Ainsi, les catalyseurs à base de nickel ont généralement une teneur en métal entre 5 et 60% en poids de nickel par rapport poids total du catalyseur.

La vitesse de la réaction d'hydrogénation est gouvernée par plusieurs critères, tels que la diffusion des réactifs à la surface du catalyseur (limitations diffusionnelles externes), la diffusion des réactifs dans la porosité du support vers les sites actifs (limitations diffusionnelles internes) et les propriétés intrinsèques de la phase active telles que la taille des particules métalliques et la répartition de la phase active au sein du support.

En ce qui concerne les limitations diffusionnelles internes, il est important que la distribution poreuse des macropores et mésopores soit adaptée à la réaction souhaitée afin d'assurer la diffusion des réactifs dans la porosité du support vers les sites actifs ainsi que la diffusion des produits formés vers l'extérieur.

En ce qui concerne la taille des particules métalliques, il est généralement admis que le catalyseur est d'autant plus actif que la taille des particules métalliques est petite. De plus, il est important d'obtenir une répartition en taille des particules centrée sur la valeur optimale ainsi qu'une répartition étroite autour de cette valeur.

La teneur souvent importante de nickel dans les catalyseurs d'hydrogénation nécessite des voies de synthèse particulières.

La voie la plus classique de préparation de ces catalyseurs est l'imprégnation du support par une solution aqueuse d'un précurseur de nickel, suivie généralement d'un séchage et d'une calcination. Avant leur utilisation dans des réactions d'hydrogénation ces catalyseurs sont généralement réduits afin d'obtenir la phase active qui est sous forme métallique (c'est-à-dire à l'état de valence zéro). Les catalyseurs à base de nickel sur alumine préparés par une seule étape d'imprégnation permettent généralement d'atteindre des teneurs en nickel comprises entre 12 et 15 % poids de nickel environ, selon le volume poreux de l'alumine utilisée. Lorsqu'on souhaite préparer des catalyseurs ayant une teneur en nickel plus élevée, plusieurs imprégnations successives sont souvent nécessaires pour obtenir la teneur en nickel souhaitée, suivie d'au moins une étape de séchage, puis éventuellement d'une étape de calcination entre chaque imprégnation.

Ainsi, le document WO2011/080515 décrit un catalyseur à base de nickel sur alumine actif en hydrogénation notamment des aromatiques, ledit catalyseur ayant une teneur en nickel supérieure à 35% poids par rapport au poids total du catalyseur, et une grande dispersion du nickel métallique sur la surface d'une alumine à porosité très ouverte et à surface spécifique élevée. Le catalyseur est préparé par au moins quatre imprégnations successives. La préparation de catalyseurs de nickel ayant une teneur en nickel élevée par la voie d'imprégnation implique ainsi un enchaînement de nombreuses étapes ce qui augmente les coûts de fabrication associés.

Une autre voie de préparation également utilisée pour obtenir des catalyseurs à forte teneur en nickel est la coprécipitation. La coprécipitation consiste généralement en une coulée simultanée dans un réacteur batch à la fois d'un sel d'aluminium (le nitrate d'aluminium par exemple) et d'un sel du nickel (le nitrate de nickel par exemple). Les deux sels précipitent simultanément. Puis une calcination à haute température est nécessaire pour faire la transition du gel d'alumine (boehmite par exemple) vers l'alumine. Par cette voie de préparation, des teneurs jusqu'à 70% poids en nickel sont atteintes. Des catalyseurs préparés par coprécipitation sont par exemple décrits dans les documents US 4 273 680, US 8 518 851 et US 2010/0116717.

Enfin, on connait également la voie de préparation par comalaxage. Le comalaxage consiste généralement en un mélange d'un sel de nickel avec un gel d'alumine tel que la boehmite, ledit mélange étant par la suite mis en forme, généralement par extrusion, puis séché et calciné. Le document US 5 478 791 décrit un catalyseur à base de nickel sur alumine ayant une teneur en nickel comprise entre 10 et 60% poids et une taille de particules de nickel comprise entre 15 et 60 nm, préparé par comalaxage d'un composé de nickel avec un gel d'alumine, suivi d'une mise en forme, d'un séchage et d'une réduction.

Par ailleurs, en vue d'obtenir de meilleures performances catalytiques, notamment une meilleure sélectivité et/ou activité, il est connu dans l'état de la technique de procéder à l'utilisation d'additifs de type composés organiques pour la préparation de catalyseurs métalliques d'hydrogénation sélective ou d'hydrogénation des aromatiques.

Par exemple, la demande FR2984761 divulgue un procédé de préparation d'un catalyseur d'hydrogénation sélective comprenant un support et une phase active comprenant un métal du groupe VIII, ledit catalyseur étant préparé par un procédé comprenant une étape de d'imprégnation d'une solution contenant un précurseur du métal du groupe VIII et un additif organique, plus particulièrement un composé organique présentant une à trois fonctions acides carboxyliques, une étape de séchage du support imprégné, et une étape de calcination du support séché afin d'obtenir le catalyseur.

Le document US2006/0149097 divulgue un procédé d'hydrogénation de composés aromatiques de type acide benzenepolycarboxylique en présence d'un catalyseur comprenant une phase active comprenant au moins un métal du groupe VIII, lequel catalyseur étant préparé par un procédé comprenant une étape d'imprégnation d'une solution contenant un précurseur du métal du groupe VIII et une étape d'imprégnation d'un additif organique de type amine ou acide aminé. L'étape d'imprégnation de l'additif organique peut être réalisé avant ou après l'étape d'imprégnation de la phase active, ou même simultanément. Les documents FR3022161 A1 et FR3022160 A1 décrivent également la préparation de catalyseurs d'hydrogénations sélectives de composés polyinsaturés et/ou aromatiques par comalaxage. L'introduction de nickel peut se faire en solution aqueuse par des complexes de polyacides ou d'un acide-alcool.

La Demanderesse a découvert de manière surprenante qu'un catalyseur à base de nickel supporté sur alumine, préparé par comalaxage d'un oxyde poreux aluminique calciné avec une solution comprenant au moins un précurseur de nickel et au moins un additif de type composés organiques choisi parmi les composés organiques comprenant au moins une fonction acide carboxylique, permet l'obtention de performances en hydrogénation sélective de composés polyinsaturés ou en hydrogénation des composés aromatiques en terme d'activité au moins aussi bonnes, voire meilleures, que les procédés connus de l'état de la technique.

La distribution poreuse résultante d'un tel procédé de préparation par comalaxage permet de fournir une porosité particulièrement adaptée à favoriser la diffusion des réactifs dans le milieu poreux puis leur réaction avec la phase active. En effet, en plus de la réduction du nombre d'étapes et donc du coût de fabrication, l'intérêt d'un comalaxage comparativement à une imprégnation est qu'on réduit de manière significative tout risque de bouchage partiel de la porosité du support lors du dépôt de la phase active et donc l'apparition des limitations diffusionnelles internes.

De plus, un tel catalyseur utilisé dans le cadre d'un procédé d'hydrogénation sélective de composés polyinsaturés ou d'un procédé d'hydrogénation des composés aromatiques ou polyaromatiques présente la particularité de pouvoir contenir des quantités élevées de phase active. En effet, le fait de préparer le catalyseur selon l'invention par comalaxage permet de pouvoir fortement charger ce catalyseur en phase active en une seule passe.

Il est important de souligner que le catalyseur obtenu par le procédé de préparation selon l'invention se distingue structurellement d'un catalyseur obtenu par simple imprégnation d'un précurseur de métal sur le support d'alumine dans lequel l'alumine forme le support et la phase active est introduite dans les pores de ce support. Sans vouloir être lié par une quelconque théorie, il apparaît que le procédé de préparation selon l'invention permet d'obtenir un composite dans lequel les particules de nickel et l'alumine sont intimement mélangées formant ainsi la structure même du catalyseur avec une porosité et une teneur en phase active adaptées aux réactions souhaitées.

### Objets de l'invention

La présente invention a pour premier objet un procédé de préparation d'un catalyseur comprenant une matrice oxyde ayant une teneur en alumine calcinée supérieure ou égale à 90% poids par rapport au poids total de ladite matrice, et une phase active comprenant du nickel, ladite phase active ne comprenant pas de métal du groupe VIB, la teneur en nickel étant comprise entre 1 et 65% en poids dudit élément par rapport au poids total du catalyseur, ladite phase active se présentant sous la forme de particules de nickel ayant un diamètre inférieur ou égal à 18 nm, ledit catalyseur comprenant un volume poreux total mesuré par porosimétrie au mercure supérieur à 0,10 mL/g, un volume mésoporeux mesuré par porosimétrie au mercure supérieur à 0,10 mL/g, un volume macroporeux mesuré par porosimétrie au mercure inférieur ou égal à 0,6 ml/g, un diamètre médian mésoporeux compris entre 3 et 25 nm, un diamètre médian macroporeux compris entre 50 et 1500 nm, et une surface spécifique SBET compris entre 20 et 400 m²/g, lequel procédé comprend les étapes suivantes :
a) on prépare un oxyde poreux aluminique calciné ;
b) on malaxe l'oxyde poreux aluminique calciné obtenu à l'étape a) avec une solution résultant d'un mélange d'une ou plusieurs solution(s) aqueuse comprenant au moins un précurseur de nickel, ledit précurseur de nickel étant le nitrate de nickel, et au moins une solution comprenant au moins un composé organique comprenant au moins une fonction acide carboxylique choisi parmi l'acide éthanedioïque (acide oxalique), l'acide propanedioïque (acide malonique), l'acide pentanedioïque (acide glutarique), l'acide hydroxyacétique (acide glycolique), l'acide 2-hydroxypropanoïque (acide lactique), l'acide 2-hydroxypropanedioïque (acide tartronique), l'acide 2-hydroxypropane-1 ,2,3-tricarboxylique (acide citrique), l'acide 2,3-dihydroxybutanedioïque (acide tartrique), l'acide 2-oxopropanoïque (acide pyruvique), l'acide 4-oxopentanoïque (acide lévulinique), pour obtenir une pâte, le rapport molaire entre ledit composé organique et l'élément nickel étant compris entre 0,01 et 5,0 mol/mol ;
c) on met en forme la pâte obtenue à l'étape b) ;
d) on sèche la pâte mise en forme obtenue à l'étape c) à une température inférieure à 250°C pour obtenir un catalyseur séché ;
e) éventuellement, on réalise un traitement thermique du catalyseur séché obtenu à l'étape d) à une température comprise entre 250 et 1000°C, en présence ou non d'eau.

Dans un mode de réalisation selon l'invention,lequel ledit oxyde poreux aluminique calciné selon l'étape a) est obtenu par les étapes suivantes :
a1) une première étape de précipitation, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 5 et 13%, le taux d'avancement étant défini comme étant la proportion d'alumine formée en équivalent Al₂0₃ lors de ladite première étape de précipitation par rapport à la quantité totale d'alumine formée à l'issue de l'étape a3) du procédé de préparation, ladite étape opérant à une température comprise entre 20 et 90°C et pendant une durée comprise entre 2 minutes et 30 minutes;
a2) une étape de chauffage de la suspension à une température comprise entre 40 et 90°C pendant une durée comprise entre 7 minutes et 45 minutes,
a3) une deuxième étape de précipitation de la suspension obtenue à l'issue de l'étape de chauffage a2) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 87 et 95 %, le taux d'avancement étant défini comme étant la proportion d'alumine formée en équivalent Al₂0₃ lors de ladite deuxième étape de précipitation par rapport à la quantité totale d'alumine formée à l'issue de l'étape a3) du procédé de préparation, ladite étape opérant à une température comprise entre 40 et 90 °C et pendant une durée comprise entre 2 minutes et 50 minutes ;
a4) une étape de filtration de la suspension obtenue à l'issue de l'étape a3) de deuxième précipitation pour obtenir un gel d'alumine ;
a5) une étape de séchage dudit gel d'alumine obtenu à l'étape a4) pour obtenir une poudre ; a6) une étape de traitement thermique de la poudre obtenue à l'issue de l'étape a5) entre 500 et 1000°C, pendant une durée comprise entre 2 et 10 h, en présence ou non d'un flux d'air contenant jusqu'à 60% volume d'eau pour obtenir un oxyde poreux aluminique calciné.

Dans un mode de réalisation selon l'invention, ledit oxyde poreux aluminique calciné selon l'étape a) est obtenu par les étapes suivantes :
a1') une étape de mise en solution d'un précurseur acide d'aluminium choisi parmi le sulfate d'aluminium, le chlorure d'aluminium et le nitrate d'aluminium dans l'eau, à une température comprise entre 20 et 90°C, à un pH compris entre 0,5 et 5, pendant une durée comprise entre 2 et 60 minutes,
a2') une étape d'ajustement du pH par ajout dans la suspension obtenue à l'étape a1') d'au moins un précurseur basique choisi parmi l'aluminate de sodium, l'aluminate de potassium, l'ammoniaque, l'hydroxyde de sodium et l'hydroxyde de potassium, à une température comprise entre 20 et 90°C, et à un pH compris entre 7 et 10, pendant une durée comprise entre 5 et 30 minutes,
a3') une étape de coprécipitation de la suspension obtenue à l'issue de l'étape a2') par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, au moins un des précurseurs basique ou acide comprenant de l'aluminium, le débit relatif des précurseurs acide et basique étant choisi de manière à obtenir un pH du milieu réactionnel compris entre 7 et 10 et le débit du ou des précurseurs acide et basique contenant de l'aluminium étant réglé de manière à obtenir une concentration en alumine finale dans la suspension comprise entre 10 et 38 g/L,
a4') une étape de filtration de la suspension obtenue à l'issue de l'étape a3') de coprécipitation pour obtenir un gel d'alumine,
a5') une étape de séchage dudit gel d'alumine obtenu à l'étape a4') pour obtenir une poudre,
a6') une étape de traitement thermique de la poudre obtenue à l'issue de l'étape a5') à une température comprise entre 500 et 1000°C, en présence ou non d'un flux d'air contenant jusqu'à 60% en volume d'eau, pendant une durée comprise entre 2 et 10 heures, pour obtenir un oxyde poreux aluminique calciné.

Dans un mode de réalisation selon l'invention, ledit oxyde poreux aluminique calciné selon l'étape a) est obtenu par les étapes suivantes :
a1") au moins une première étape de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de ladite première étape compris entre 40 et 100%, le taux d'avancement étant défini comme étant la proportion d'alumine formée en équivalent Al₂O₃ lors de ladite première étape de précipitation par rapport à la quantité totale d'alumine formée à l'issue de l'étape c) du procédé de préparation, ladite première étape de précipitation opérant à une température comprise entre 10 et 50 °C, et pendant une durée comprise entre 2 minutes et 30 minutes ;
a2") une étape de traitement thermique de la suspension chauffée à une température comprise entre 50 et 200°C pendant une durée comprise entre 30 minutes et 5 heures permettant l'obtention d'un gel d'alumine ;
a3") une étape de filtration de la suspension obtenue à l'issue de l'étape a2") de traitement thermique, suivie d'au moins une étape de lavage du gel obtenu ;
a4") une étape de séchage du gel d'alumine obtenu à l'issue de l'étape a3") pour obtenir une poudre ;
a5") une étape de traitement thermique de la poudre obtenue à l'issue de l'étape a4") à une température comprise entre 500 et 1000°C, en présence ou non d'un flux d'air contenant jusqu'à 60% en volume d'eau, pour obtenir un oxyde poreux aluminique calciné.

Le procédé d'hydrogénation sélective de composés polyinsaturés contenant au moins 2 atomes de carbone par molécule, tels que les dioléfines et/ou les acétyléniques et/ou les alcénylaromatiques, contenus dans une charge d'hydrocarbures ayant un point d'ébullition final inférieur ou égal à 300°C, est réalisé à une température comprise entre 0 et 300°C, à une pression comprise entre 0,1 et 10 MPa, à un ratio molaire hydrogène/(composés polyinsaturés à hydrogéner) compris entre 0,1 et 10 et à une vitesse volumique horaire comprise entre 0,1 et 200 h⁻¹ lorsque le procédé est réalisé en phase liquide, ou à un ratio molaire hydrogène/(composés polyinsaturés à hydrogéner) compris entre 0,5 et 1000 et à une vitesse volumique horaire entre 100 et 40000 h⁻¹ lorsque le procédé est réalisé en phase gazeuse, en présence d'un catalyseur obtenu par le procédé de préparation selon l'invention.

Le procédé d'hydrogénation d'au moins un composé aromatique ou polyaromatique contenu dans une charge d'hydrocarbures ayant un point d'ébullition final inférieur ou égal à 650 °C mettant en oeuvre un catalyseur préparé selon le mode de préparation selon l'invention est également décrit, ledit procédé étant réalisé en phase gazeuse ou en phase liquide, à une température comprise entre 30 et 350°C, à une pression comprise entre 0,1 et 20 MPa, à un ratio molaire hydrogène/(composés aromatiques à hydrogéner) entre 0,1 et 10 et à une vitesse volumique horaire V.V.H. comprise entre 0,05 et 50 h⁻¹, en présence d'un catalyseur obtenu par le procédé de préparation selon l'invention.

### Description détaillée de l'invention

### Définitions

Par « macropores », on entend des pores dont l'ouverture est supérieure à 50 nm.

Par « mésopores », on entend des pores dont l'ouverture est comprise entre 2 nm et 50 nm, bornes incluses.

Par « micropores », on entend des pores dont l'ouverture est inférieure à 2 nm.

On entend par volume poreux total du catalyseur ou du support utilisé pour la préparation du catalyseur le volume mesuré par intrusion au porosimètre à mercure selon la norme ASTM D4284-83 à une pression maximale de 4000 bar (400 MPa), utilisant une tension de surface de 484 dyne/cm et un angle de contact de 140°. L'angle de mouillage a été pris égal à 140° en suivant les recommandations de l'ouvrage « Techniques de l'ingénieur, traité analyse et caractérisation », pages 1050-1055, écrit par Jean Charpin et Bernard Rasneur.

Afin d'obtenir une meilleure précision, la valeur du volume poreux total correspond à la valeur du volume poreux total mesuré par intrusion au porosimètre à mercure mesurée sur l'échantillon moins la valeur du volume poreux total mesuré par intrusion au porosimètre à mercure mesurée sur le même échantillon pour une pression correspondant à 30 psi (environ 0,2 MPa).

Le volume des macropores et des mésopores est mesuré par porosimétrie par intrusion de mercure selon la norme ASTM D4284-83 à une pression maximale de 4000 bar (400 MPa), utilisant une tension de surface de 484 dyne/cm et un angle de contact de 140°. On fixe à 0,2 MPa la valeur à partir de laquelle le mercure remplit tous les vides intergranulaires, et on considère qu'au-delà le mercure pénètre dans les pores de l'échantillon.

Le volume macroporeux du catalyseur ou du support utilisé pour la préparation du catalyseur est défini comme étant le volume cumulé de mercure introduit à une pression comprise entre 0,2 MPa et 30 MPa, correspondant au volume contenu dans les pores de diamètre apparent supérieur à 50 nm.

Le volume mésoporeux du catalyseur ou du support utilisé pour la préparation du catalyseur est défini comme étant le volume cumulé de mercure introduit à une pression comprise entre 30 MPa et 400 MPa, correspondant au volume contenu dans les pores de diamètre apparent compris entre 2 et 50 nm.

Le volume des micropores est mesuré par porosimétrie à l'azote. L'analyse quantitative de la microporosité est effectuée à partir de la méthode "t" (méthode de Lippens-De Boer, 1965) qui correspond à une transformée de l'isotherme d'adsorption de départ comme décrit dans l'ouvrage « Adsorption by powders and porous solids. Principles, methodology and applications » écrit par F. Rouquérol, J. Rouquérol et K. Sing, Academic Press, 1999.

On définit également le diamètre médian mésoporeux comme étant le diamètre tel que tous les pores, parmi l'ensemble des pores constituant le volume mésoporeux, de taille inférieure à ce diamètre constituent 50% du volume mésoporeux total déterminé par intrusion au porosimètre à mercure.

On définit également le diamètre médian macroporeux comme étant le diamètre tel que tous les pores, parmi l'ensemble des pores constituant le volume macroporeux, de taille inférieure à ce diamètre constituent 50% du volume macroporeux total déterminé par intrusion au porosimètre à mercure.

On entend par la surface spécifique du catalyseur ou du support utilisé pour la préparation du catalyseur selon l'invention, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society », 60, 309, (1938).

On entend par taille des nanoparticules de nickel, le diamètre moyen des cristallites de nickel mesurée sous leurs formes oxyde. Le diamètre moyen des cristallites de nickel sous forme oxyde est déterminé par diffraction des rayons X, à partir de la largeur de la raie de diffraction située à l'angle 2thêta=43° (c'est-à-dire selon la direction cristallographique [200]) à l'aide de la relation de Scherrer. Cette méthode, utilisée en diffraction des rayons X sur des poudres ou échantillons polycristallins qui relie la largeur à mi-hauteur des pics de diffraction à la taille des particules, est décrite en détail dans la référence : Appl. Cryst. (1978), 11, 102-113 « Scherrer after sixty years: A survey and some new results in the détermination of crystallite size», J. I. Langford and A. J. C. Wilson.

Dans la suite, les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

### Description du procédé de préparation du catalyseur

D'une manière générale, le procédé de préparation du catalyseur comprend les étapes suivantes :
a) on prépare un oxyde poreux aluminique calciné ;
b) on malaxe l'oxyde poreux aluminique calciné obtenu à l'étape a) avec une solution résultant du mélange d'une ou plusieurs solution(s) aqueuse(s) comprenant au moins un précurseur de nickel, ledit précurseur de nickel étant le nitrate de nickel, et au moins une solution comprenant au moins un composé organique comprenant au moins une fonction acide carboxylique et est choisi parmi l'acide éthanedioïque (acide oxalique), l'acide propanedioïque (acide malonique), l'acide pentanedioïque (acide glutarique), l'acide hydroxyacétique (acide glycolique), l'acide 2-hydroxypropanoïque (acide lactique), l'acide 2-hydroxypropanedioïque (acide tartronique), l'acide 2-hydroxypropane-1 ,2,3-tricarboxylique (acide citrique), l'acide 2,3-dihydroxybutanedioïque (acide tartrique), l'acide 2-oxopropanoïque (acide pyruvique), l'acide 4-oxopentanoïque (acide lévulinique), pour obtenir une pâte, le rapport molaire entre ledit composé organique et l'élément nickel étant compris entre 0,01 et 5,0 mol/mol ;
c) on met en forme la pâte obtenue à l'étape b) ;
d) on sèche la pâte mise en forme obtenue à l'étape c) à une température inférieure à 250°C pour obtenir un catalyseur séché ;
e) éventuellement, on réalise un traitement thermique du catalyseur séché obtenu à l'étape d) à une température comprise entre 250 et 1000°C, en présence ou non d'eau.

Avantageusement, l'oxyde poreux aluminique calciné est obtenu à partir d'un gel d'alumine spécifique. La distribution poreuse particulière observée dans le catalyseur est notamment due au procédé de préparation à partir du gel d'alumine spécifique.

### Etape a) de préparation de l'oxyde aluminique calciné

L'oxyde aluminique calciné peut être synthétisé par différentes méthodes connues par l'homme du métier. Par exemple, on met en oeuvre un procédé d'obtention de gel constitué d'un précurseur de type gamma-oxy(hydroxyde) d'aluminium (AIO(OH) autrement dénommé boehmite. Le gel d'alumine peut par exemple être obtenu par précipitation des solutions basiques et/ou acides de sels d'aluminium induite par changement de pH ou toute autre méthode connue de l'homme de métier. Cette méthode est notamment décrite par le document P. Euzen, P. Raybaud, X. Krokidis, H. Toulhoat, J.L. Le Loarer, J.P. Jolivet, C. Froidefond, Alumina, in Handbook of Porous Solids, Eds F. Schüth, K.S.W. Sing, J. Weitkamp, Wiley-VCH, Weinheim, Germany, 2002, pp. 1591-1677.

De manière particulièrement préférée, l'oxyde poreux aluminique est préparé à partir de gels d'alumine spécifiques préparés selon des modes particuliers de préparation tels que décrits ci-après.

### Mode de réalisation 1 :

Selon une première variante, l'oxyde poreux aluminique calciné utilisé dans le cadre du procédé de préparation du catalyseur selon l'invention est obtenu en réalisant les étapes suivantes :
a1) une première étape de précipitation, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 5 et 13%, le taux d'avancement étant défini comme étant la proportion d'alumine formée en équivalent Al₂O₃ lors de ladite première étape de précipitation par rapport à la quantité totale d'alumine formée à l'issue de l'étape a3) du procédé de préparation, ladite étape opérant à une température comprise entre 20 et 90°C et pendant une durée comprise entre 2 minutes et 30 minutes;
a2) une étape de chauffage de la suspension à une température comprise entre 40 et 90°C pendant une durée comprise entre 7 minutes et 45 minutes,
a3) une deuxième étape de précipitation de la suspension obtenue à l'issue de l'étape de chauffage a2) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 87 et 95 %, le taux d'avancement étant défini comme étant la proportion d'alumine formée en équivalent Al₂O₃ lors de ladite deuxième étape de précipitation par rapport à la quantité totale d'alumine formée à l'issue de l'étape a3) du procédé de préparation, ladite étape opérant à une température comprise entre 40 et 90 °C et pendant une durée comprise entre 2 minutes et 50 minutes ;
a4) une étape de filtration de la suspension obtenue à l'issue de l'étape a3) de deuxième précipitation pour obtenir un gel d'alumine ;
a5) une étape de séchage dudit gel d'alumine obtenu à l'étape a4) pour obtenir une poudre ; par exemple à une température comprise entre 20 et 200°C et pendant une durée comprise entre 8 h et 15 h ;
a6) une étape de traitement thermique de la poudre obtenue à l'issue de l'étape a5) entre 500 et 1000°C, pendant une durée comprise entre 2 et 10 h, en présence ou non d'un flux d'air contenant jusqu'à 60% volume d'eau pour obtenir un oxyde poreux aluminique calciné.

Le taux d'avancement pour chacune des étapes de précipitation est défini comme étant la proportion d'alumine formée en équivalent Al₂O₃ lors de ladite première ou deuxième étape de précipitation par rapport à la quantité totale d'alumine formée en équivalent Al₂O₃ à l'issue des deux étapes de précipitation et plus généralement à l'issue des étapes de préparation du gel d'alumine et notamment à l'issue de l'étape a3) du procédé de préparation selon l'invention.

### Mode de réalisation 2

Selon une deuxième variante, l'oxyde poreux aluminique calciné utilisé dans le cadre du procédé de préparation du catalyseur selon l'invention est obtenu en réalisant les étapes suivantes :
a1') une étape de mise en solution d'un précurseur acide d'aluminium choisi parmi le sulfate d'aluminium, le chlorure d'aluminium et le nitrate d'aluminium dans l'eau, à une température comprise entre 20 et 90°C, à un pH compris entre 0,5 et 5, pendant une durée comprise entre 2 et 60 minutes,
a2') une étape d'ajustement du pH par ajout dans la suspension obtenue à l'étape a1') d'au moins un précurseur basique choisi parmi l'aluminate de sodium, l'aluminate de potassium, l'ammoniaque, l'hydroxyde de sodium et l'hydroxyde de potassium, à une température comprise entre 20 et 90°C, et à un pH compris entre 7 et 10, pendant une durée comprise entre 5 et 30 minutes,
a3') une étape de coprécipitation de la suspension obtenue à l'issue de l'étape a2') par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, au moins un des précurseurs basique ou acide comprenant de l'aluminium, le débit relatif des précurseurs acide et basique étant choisi de manière à obtenir un pH du milieu réactionnel compris entre 7 et 10 et le débit du ou des précurseurs acide et basique contenant de l'aluminium étant réglé de manière à obtenir une concentration en alumine finale dans la suspension comprise entre 10 et 38 g/L,
a4') une étape de filtration de la suspension obtenue à l'issue de l'étape a3') de coprécipitation pour obtenir un gel d'alumine,
a5') une étape de séchage dudit gel d'alumine obtenu à l'étape a4') pour obtenir une poudre, ladite étape de séchage pouvant être opérée à une température comprise entre 120 et 300°C, de manière très préférée à une température comprise entre 150 et 250°C, pendant 2 à 16 h ;
a6') une étape de traitement thermique de la poudre obtenue à l'issue de l'étape a5') à une température comprise entre 500 et 1000°C, en présence ou non d'un flux d'air contenant jusqu'à 60% en volume d'eau, pendant une durée comprise entre 2 et 10 heures, pour obtenir un oxyde poreux aluminique calciné.

### Mode de réalisation 3 :

Selon une troisième variante, l'oxyde poreux aluminique calciné utilisé dans le cadre du procédé de préparation du catalyseur selon l'invention est obtenu en réalisant les étapes suivantes :
a1") au moins une première étape de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de ladite première étape compris entre 40 et 100%, le taux d'avancement étant défini comme étant la proportion d'alumine formée en équivalent Al₂O₃ lors de ladite première étape de précipitation par rapport à la quantité totale d'alumine formée à l'issue de l'étape c) du procédé de préparation, ladite première étape de précipitation opérant à une température comprise entre 10 et 50 °C, et pendant une durée comprise entre 2 minutes et 30 minutes ;
a2") une étape de traitement thermique de la suspension chauffée à une température comprise entre 50 et 200°C pendant une durée comprise entre 30 minutes et 5 heures permettant l'obtention d'un gel d'alumine ;
a3") une étape de filtration de la suspension obtenue à l'issue de l'étape a2") de traitement thermique, suivie d'au moins une étape de lavage du gel obtenu ;
a4") une étape de séchage du gel d'alumine obtenu à l'issue de l'étape a3") pour obtenir une poudre ; ladite étape de séchage étant mise en oeuvre à une température comprise entre 20 et 250°C, de préférence entre 50 et 200°C, pendant une durée comprise entre 1 jour et 3 semaines, de préférence entre 2 heures et 1 semaine et encore plus préférentiellement entre 5 heures et 48 heures ;
a5") une étape de traitement thermique de la poudre obtenue à l'issue de l'étape a4") à une température comprise entre 500 et 1000°C, en présence ou non d'un flux d'air contenant jusqu'à 60% en volume d'eau, pendant une durée comprise entre 2 et 10 h, pour obtenir un oxyde poreux aluminique calciné.

De manière générale, on entend par « taux d'avancement » de la n-ième étape de précipitation le pourcentage d'alumine formé en équivalent Al₂O₃ dans ladite n-ième étape, par rapport à la quantité totale d'alumine formée à l'issue de l'ensemble des étapes de précipitation et plus généralement à l'issue des étapes de préparation du gel d'alumine. Dans le cas où le taux d'avancement de ladite étape a1") de précipitation est de 100%, ladite étape a1") de précipitation permet généralement l'obtention d'une suspension d'alumine ayant une concentration en Al₂O₃ comprise entre 20 et 100 g/L, de préférence entre 20 et 80 g/L, de manière préférée entre 20 et 50 g/L.

### Etape b) Comalaxage

Dans cette étape, l'oxyde poreux aluminique calciné obtenu à l'étape a) est malaxé avec une solution résultant d'un mélange d'une ou plusieurs solution(s) aqueuse(s) comprenant un précurseur de nickel, ledit précurseur de nickel étant le nitrate de nickel, et au moins une solution comprenant au moins un composé organique comprenant au moins une fonction acide carboxylique et est choisi parmi l'acide éthanedioïque (acide oxalique), l'acide propanedioïque (acide malonique), l'acide pentanedioïque (acide glutarique), l'acide hydroxyacétique (acide glycolique), l'acide 2-hydroxypropanoïque (acide lactique), l'acide 2-hydroxypropanedioïque (acide tartronique), l'acide 2-hydroxypropane-1 ,2,3-tricarboxylique (acide citrique), l'acide 2,3-dihydroxybutanedioïque (acide tartrique), l'acide 2-oxopropanoïque (acide pyruvique), l'acide 4-oxopentanoïque (acide lévulinique), pour obtenir une pâte, le rapport molaire entre ledit composé organique et l'élément nickel étant compris entre 0,01 et 5,0 mol/mol.

La(les)dite(s) solution(s) comprenant un précurseur de nickel est(sont) aqueuse(s).

Le pH de cette solution pourra être modifié par l'ajout éventuel d'un acide. Selon une autre variante préférée, la solution aqueuse peut contenir de l'ammoniaque ou des ions d'ammonium NH₄⁺. Ledit précurseur de nickel est introduit en solution aqueuse sous forme de nitrate, laquelle est mise en contact avec ledit oxyde poreux aluminique calciné.

Les quantités du ou des précurseurs de nickel introduites dans la solution sont choisies de telle manière que la teneur totale en nickel est comprise entre 1 et 65 % poids, de préférence comprise entre 5 et 55 % poids, de manière préférée comprise entre 8 et 40 % poids, et de manière particulièrement préférée comprise entre 10 et 35 % poids, de manière encore plus préférée entre 12 et 35 % poids, de manière encore plus préférée entre 15 et 35 % en poids, et de manière plus particulièrement préférée entre 18 et 32% en poids dudit élément par rapport à la masse totale du catalyseur. Les teneurs en nickel sont généralement adaptées aux réactions d'hydrogénation visées tel que décrit ci-dessus.

La(les)dite(s) solution(s) contenant au moins un composé organique comprenant au moins une fonction acide carboxylique et est choisi parmi l'acide éthanedioïque (acide oxalique), l'acide propanedioïque (acide malonique), l'acide pentanedioïque (acide glutarique), l'acide hydroxyacétique (acide glycolique), l'acide 2-hydroxypropanoïque (acide lactique), l'acide 2-hydroxypropanedioïque (acide tartronique), l'acide 2-hydroxypropane-1,2,3-tricarboxylique (acide citrique), l'acide 2,3-dihydroxybutanedioïque (acide tartrique), l'acide 2-oxopropanoïque (acide pyruvique), l'acide 4-oxopentanoïque (acide lévulinique), peu(ven)t être aqueuse(s) ou organique(s) (par exemple le méthanol ou l'éthanol ou le phénol ou l'acétone ou le toluène ou le diméthylsulfoxyde (DMSO)) ou bien constituée(s) d'un mélange d'eau et d'au moins un solvant organique. Le(s)dit(s) composé(s) organique(s) est(sont) préalablement au moins partiellement dissous dans la(les)dite(s) solution(s) à la concentration voulue. De préférence, la(les)dite(s) solution(s) est(sont) aqueuse(s) ou contien(nen)t de l'éthanol. De façon encore plus préférée, ladite solution est aqueuse. Le pH de ladite solution pourra être modifié par l'ajout éventuel d'un acide ou d'une base.

Le comalaxage se déroule avantageusement dans un malaxeur, par exemple un malaxeur de type "Brabender" bien connu de l'Homme du métier. La poudre d'alumine calcinée obtenue à l'étape a) est placée dans la cuve du malaxeur. Ensuite la solution résultant du mélange d'une ou plusieurs solution(s) comprenant au moins un précurseur de nickel et d'au moins une solution comprenant au moins un composé organique comprenant au moins une fonction acide carboxylique, ou au moins une fonction alcool, ou au moins une fonction ester, ou au moins une fonction amide, ou au moins une fonction amine, et éventuellement de l'eau permutée, est ajoutée à la seringue ou avec tout autre moyen pendant une durée de quelques minutes, typiquement environ 2 minutes à une vitesse de malaxage donnée. Après l'obtention d'une pâte, le malaxage peut être poursuivi pendant quelques minutes, par exemple environ 15 minutes à 50 tr/min.

Ladite solution résultant du mélange peut également être ajoutée en plusieurs fois durant cette phase de comalaxage.

Selon l'invention, le composé organique comprend au moins une fonction acide carboxylique et est choisi parmi l'acide éthanedioïque (acide oxalique), l'acide propanedioïque (acide malonique), l'acide pentanedioïque (acide glutarique), l'acide hydroxyacétique (acide glycolique), l'acide 2-hydroxypropanoïque (acide lactique), l'acide 2-hydroxypropanedioïque (acide tartronique), l'acide 2-hydroxypropane-1,2,3-tricarboxylique (acide citrique), l'acide 2,3-dihydroxybutanedioïque (acide tartrique), l'acide 2-oxopropanoïque (acide pyruvique), l'acide 4-oxopentanoïque (acide lévulinique). Le rapport molaire dudit composé organique comprenant au moins une fonction acide carboxylique est compris entre 0,01 et 5,0 mol/mol, de préférence compris entre 0,05 et 2,0 mol/mol, plus préférentiellement entre 0,1 et 1,5 mol/mol et encore plus préférentiellement entre 0,3 et 1,2 mol/mol, par rapport à l'élément nickel.

Ledit composé organique comprenant au moins une fonction acide carboxylique peut être un composé organique aliphatique, saturé ou insaturé, ou un composé organique aromatique. De préférence, le composé organique aliphatique, saturé ou insaturé, comprend entre 1 et 9 atomes de carbone, de préférence entre 2 et 7 atomes de carbone. De préférence, le composé organique aromatique comprend entre 7 et 10 atomes de carbone, de préférence entre 7 et 9 atomes de carbone.

Selon l'invention, ledit composé organique est choisi parmi l'acide éthanedioïque (acide oxalique), l'acide propanedioïque (acide malonique), l'acide pentanedioïque (acide glutarique), l'acide hydroxyacétique (acide glycolique), l'acide 2-hydroxypropanoïque (acide lactique), l'acide 2-hydroxypropanedioïque (acide tartronique), l'acide 2-hydroxypropane-1,2,3-tricarboxylique (acide citrique), l'acide 2,3-dihydroxybutanedioïque (acide tartrique), l'acide 2-oxopropanoïque (acide pyruvique), l'acide 4-oxopentanoïque (acide lévulinique).

### Etape c) Mise en forme

La pâte obtenue à l'issue de l'étape de comalaxage b) est ensuite mise en forme selon toute technique connue de l'Homme du métier, par exemple les méthodes de mise en forme par extrusion, par pastillage, par la méthode de la goutte d'huile (égouttage) ou par granulation au plateau tournant.

De préférence, la pâte est mise en forme par extrusion sous forme d'extrudés de diamètre généralement compris entre 0,5 et 10 mm, de préférence 0,8 et 3,2 mm, et de manière très préférée entre 1,0 et 2,5 mm. Celui-ci peut être avantageusement présenté sous la forme d'extrudés cylindriques, trilobés ou quadrilobés. De préférence sa forme sera trilobée ou quadrilobée.

De manière très préférée, ladite étape b) de comalaxage et ladite étape c) de mise en forme sont réunies en une seule étape de malaxage-extrusion. Dans ce cas, la pâte obtenue à l'issue du malaxage peut être introduite dans une extrudeuse piston au travers d'une filière ayant le diamètre souhaité, typiquement entre 0,5 et 10 mm.

### Etape d) Séchage de la pâte mise en forme

Conformément à l'invention, la pâte mise en forme subit un séchage d) à une température inférieure à 250°C, de préférence comprise entre 15 et 240°C, plus préférentiellement entre 30 et 220°C, encore plus préférentiellement entre 50 et 200°C, et de manière encore plus préférentielle entre 70 et 180°C, pendant une durée typiquement comprise entre 10 minutes et 24 heures. Des durées plus longues ne sont pas exclues, mais n'apportent pas nécessairement d'amélioration.

L'étape de séchage peut être effectuée par toute technique connue de l'Homme du métier. Elle est avantageusement effectuée sous une atmosphère inerte ou sous une atmosphère contenant de l'oxygène ou sous un mélange de gaz inerte et d'oxygène. Elle est avantageusement effectuée à pression atmosphérique ou à pression réduite. De manière préférée, cette étape est réalisée à pression atmosphérique et en présence d'air ou d'azote.

### Etape e) Traitement thermique du catalyseur séché (optionnelle)

Le catalyseur ainsi séché peut ensuite subir une étape complémentaire de traitement thermique ou hydrothermique e) à une température comprise entre 250 et 1000°C et de préférence entre 250 et 750°C, pendant une durée typiquement comprise entre 15 minutes et 10 heures, sous une atmosphère inerte ou sous une atmosphère contenant de l'oxygène, en présence d'eau ou non. Des durées de traitement plus longues ne sont pas exclues, mais n'apportent pas nécessaire d'amélioration. Plusieurs cycles combinés de traitements thermiques ou hydrothermiques peuvent être réalisés. Après ce ou ces traitement(s), le précurseur de catalyseur comprend du nickel sous forme oxyde, c'est-à-dire sous forme NiO.

Dans le cas où de l'eau serait ajoutée, le contact avec la vapeur d'eau peut se dérouler à pression atmosphérique ou en pression autogène. La teneur en eau est de préférence comprise entre 150 et 900 grammes par kilogramme d'air sec, et de manière encore plus préférée, entre 250 et 650 grammes par kilogramme d'air sec.

### Etape f) Réduction par un gaz réducteur (optionnelle)

Préalablement à l'utilisation du catalyseur dans le réacteur catalytique et la mise en oeuvre d'un procédé d'hydrogénation, on effectue avantageusement au moins une étape de traitement réducteur f) en présence d'un gaz réducteur après les étapes d) ou e) de manière à obtenir un catalyseur comprenant du nickel au moins partiellement sous forme métallique.

Ce traitement permet d'activer ledit catalyseur et de former des particules métalliques, en particulier du nickel à l'état zéro valent. Ledit traitement réducteur peut être réalisé *in-situ* ou *ex-situ* c'est-à-dire après ou avant le chargement du catalyseur dans le réacteur d'hydrogénation.

Le gaz réducteur est de préférence l'hydrogène. L'hydrogène peut être utilisé pur ou en mélange (par exemple un mélange hydrogène/azote, hydrogène/argon, hydrogène/méthane). Dans le cas où l'hydrogène est utilisé en mélange, toutes les proportions sont envisageables.

Ledit traitement réducteur est réalisé à une température comprise entre 120 et 500°C, de préférence entre 150 et 450°C. Lorsque le catalyseur ne subit pas de passivation, ou subit un traitement réducteur avant passivation, le traitement réducteur est effectué à une température comprise entre 350 et 500°C, de préférence entre 350 et 450 °C. Lorsque le catalyseur a subi au préalable une passivation, le traitement réducteur est généralement effectué à une température comprise entre 120 et 350°C, de préférence entre 150 et 350°C. La durée du traitement réducteur est généralement comprise entre 2 et 40 heures, de préférence entre 3 et 30 heures. La montée en température jusqu'à la température de réduction désirée est généralement lente, par exemple fixée entre 0,1 et 10°C/min, de préférence entre 0,3 et 7°C/min.

Le débit d'hydrogène, exprimé en L/heure/gramme de catalyseur est compris entre 0,1 et 100 L/heure/gramme de catalyseur, de préférence entre 0,5 et 10 L/heure/gramme de catalyseur, de façon encore plus préférée entre 0,7 et 5 L/heure/gramme de catalyseur.

### Etape a) Passivation (optionnelle)

Préalablement à sa mise en oeuvre dans le réacteur catalytique, le catalyseur peut éventuellement subir une étape de passivation (étape g) par un composé soufré ou oxygéné ou par le CO₂ avant ou après l'étape de traitement réducteur f). Cette étape de passivation peut être effectuée *ex-situ* ou *in-situ.* L'étape de passivation est réalisée par la mise en oeuvre de méthodes connues de l'Homme du métier.

L'étape de passivation par le soufre permet d'améliorer la sélectivité des catalyseurs et d'éviter les emballements thermiques lors des démarrages de catalyseurs neufs (« run away » selon la terminologie anglo-saxonne). La passivation consiste généralement à empoisonner irréversiblement par le composé soufré les sites actifs les plus virulents du nickel qui existent sur le catalyseur neuf et donc à atténuer l'activité du catalyseur en faveur de sa sélectivité. L'étape de passivation est réalisée par la mise en oeuvre de méthodes connues de l'Homme du métier et notamment, à titre d'exemple par la mise en oeuvre de l'une des méthodes décrites dans les documents de brevets EP0466567, US5153163, FR2676184, WO2004/098774, EP0707890. Le composé soufré est par exemple choisi parmi les composés suivants: thiophène, thiophane, alkylmonosulfures tels que diméthylsulfure, diéthylsulfure, dipropylsulfure et propylméthylsulfure ou encore un disulfure organique de formule HO-R₁-S-S-R₂-OH tel que le di-thio-di-éthanol de formule HO-C₂H₄-S-S-C₂H₄-OH (appelé souvent DEODS). La teneur en soufre est généralement comprise entre 0,1 et 2 % poids dudit élément par rapport à la masse du catalyseur.

L'étape de passivation par un composé oxygéné ou par le CO₂ est généralement effectuée après un traitement réducteur au préalable à température élevée, généralement comprise entre 350 et 500°C, et permet de préserver la phase métallique du catalyseur en présence d'air. Un deuxième traitement réducteur à température plus basse généralement entre 120 et 350°C, est ensuite généralement effectué. Le composé oxygéné est généralement l'air ou tout autre flux contenant de l'oxygène.

### Caractéristiques du catalyseur

Le catalyseur obtenu par le procédé de préparation selon l'invention se présente sous la forme d'un composite comprenant une matrice oxyde ayant une teneur en alumine calcinée supérieure ou égale à 90% poids par rapport au poids total de ladite matrice, au sein duquel est réparti la phase active comprenant du nickel, de préférence constituée de nickel. Les caractéristiques du gel ayant conduit à l'obtention de l'alumine contenue dans ladite matrice oxyde, ainsi que les propriétés texturales obtenues avec la phase active confèrent au catalyseur ses propriétés spécifiques.

Plus particulièrement, ledit catalyseur comprenant une matrice oxyde ayant une teneur en alumine calcinée supérieure ou égale à 90% poids par rapport au poids total de ladite matrice, et une phase active comprenant du nickel, de préférence constituée de nickel, ladite phase active ne comprenant pas de métal du groupe VIB (Cr, Mo, W), la teneur en nickel étant comprise entre 1 et 65% en poids dudit élément par rapport au poids total du catalyseur, ladite phase active se présentant sous la forme de particules de nickel ayant un diamètre inférieur ou égal à 18 nm, ledit catalyseur comprenant un volume poreux total mesuré par porosimétrie au mercure supérieur à 0,10 mL/g, un volume mésoporeux mesuré par porosimétrie au mercure supérieur à 0,10 mL/g, un volume macroporeux mesuré par porosimétrie au mercure inférieur ou égal à 0,6 mL/g, un diamètre médian mésoporeux compris entre 3 et 25 nm, un diamètre médian macroporeux compris entre 50 et 1500 nm, et une surface spécifique SBET compris entre 20 et 400 m²/g. Toutes les propriétés texturales (volume poreux total, volume mésoporeux, volume macroporeux, diamètre médian mésoporeux, diamètre médian macroporeux, surface spécifique) sont mesurées sur le catalyseur séché (si le procédé de préparation du catalyseur ne prévoit l'étape optionnelle e) de traitement thermique après l'étape d) de séchage) ou sur le catalyseur obtenu après l'étape e) de traitement thermique (si cette étape est réalisée).

La teneur en nickel est comprise entre 1 et 65 % poids, de préférence comprise entre 5 et 55 % poids, de manière préférée comprise entre 8 et 40 % poids, et de manière particulièrement préférée comprise entre 10 et 35 % poids, de manière encore plus préférée entre 12 et 35 % poids, de manière encore plus préférée entre 15 et 35 % en poids, et de manière plus particulièrement préférée entre 18 et 32% en poids dudit élément par rapport à la masse totale du catalyseur. La teneur en Ni est mesurée par fluorescence X.

La taille des particules de nickel dans le catalyseur selon l'invention, mesurée sous leur forme oxyde, est inférieure à 18 nm, de préférence inférieure à 15 nm, plus préférentiellement comprise entre 0,5 et 12 nm, de manière préférée comprise entre 1 et 8 nm, de manière encore plus préférée entre 1 et 6 nm, et encore plus préférentiellement entre 1,5 et 5 nm. La phase active du catalyseur ne comprend pas de métal du groupe VIB. Elle ne comprend notamment pas de molybdène ou de tungstène.

Sans vouloir se lier à aucune théorie, il semble que le catalyseur obtenu par le procédé de préparation selon l'invention, présente lorsque ce dernier est utilisé dans le cadre du procédé d'hydrogénation sélective de composés polyinsaturés ou d'hydrogénation des aromatiques un bon compromis entre un volume poreux élevé, un volume mésoporeux et un diamètre médian mésoporeux élevés, une teneur en Ni élevée, une petite taille de particules de nickel permettant ainsi d'avoir des performances en hydrogénation en terme d'activité au moins aussi bonnes que les catalyseurs connus de l'état de l'art antérieur.

Le catalyseur comprend en outre une matrice oxyde ayant une teneur en alumine calcinée supérieure ou égale à 90% poids par rapport au poids total de ladite matrice, éventuellement complétée par de la silice et/ou du phosphore à une teneur totale d'au plus 10% poids en équivalent SiO₂ et/ou P₂O₅, de préférence inférieure à 5% poids, et de manière très préférée inférieure à 2% poids par rapport au poids total de ladite matrice. La silice et/ou le phosphore peuvent être introduits par toute technique connue de l'Homme du métier, lors de la synthèse du gel d'alumine ou lors du comalaxage.

De manière encore plus préférée, la matrice oxyde est constituée d'alumine.

De manière préférée, l'alumine présente dans ladite matrice est une alumine de transition telle qu'une alumine gamma, delta, thêta, chi, rho ou êta, seule ou en mélange. De manière plus préférée, l'alumine est une alumine de transition gamma, delta ou thêta, seule ou en mélange.

Ledit catalyseur est généralement présenté sous toutes les formes connues de l'Homme du métier, par exemple sous forme de billes (ayant généralement un diamètre compris entre 1 et 8 mm), d'extrudés, de tablettes, de cylindres creux. De préférence, il est constitué d'extrudés de diamètre généralement compris entre 0,5 et 10 mm, de préférence entre 0,8 et 3,2 mm et de manière très préférée entre 1,0 et 2,5 mm et de longueur moyenne comprise entre 0,5 et 20 mm. On entend par « diamètre moyen » des extrudés le diamètre moyen du cercle circonscrit à la section droite de ces extrudés. Le catalyseur peut être avantageusement présenté sous la forme d'extrudés cylindriques, multilobés, trilobés ou quadrilobés. De préférence sa forme sera trilobée ou quadrilobée. La forme des lobes pourra être ajustée selon toutes les méthodes connues de l'art antérieur.

Le catalyseur présente un volume poreux total d'au moins 0,10 mL/g, de préférence d'au moins 0,30 mL/g, de manière préférée compris entre 0,35 et 1,2 mL/g, plus préférentiellement entre 0,4 et 1 mL/g et encore plus préférentiellement entre 0,45 et 0,9 mL/g.

Le catalyseur présente avantageusement un volume macroporeux inférieur ou égal à 0,6 mL/g, de préférence inférieur ou égal à 0,5 mL/g, plus préférentiellement inférieur ou égal à 0,4 mL/g, et encore plus préférentiellement entre 0,02 et 0,3 mL/g.

Le volume mésoporeux du catalyseur est d'au moins 0,10 mL/g, de préférence d'au moins 0,20 mL/g, de manière préférée compris entre 0,25 mL/g et 0,80 mL/g, de manière plus préférée entre 0,30 et 0,65 mL/g, et encore plus préférentiellement entre 0,35 et 0,55 mL/g.

Le diamètre médian mésoporeux est compris entre 3 nm et 25 nm, et de préférence entre 6 et 20 nm, et de manière particulièrement préférée compris entre 8 et 18 nm.

Le catalyseur présente un diamètre médian macroporeux compris entre 50 et 1500 nm, de préférence entre 80 et 1000 nm, de manière encore plus préférée compris entre 250 et 800 nm.

Le catalyseur présente une surface spécifique B.E.T. comprise entre 20 et 400 m²/g, et de manière plus préférée entre 30 et 350 m²/g, et de manière encore plus préférée entre 40 et 250 m²/g. La surface spécifique est mesurée sur le catalyseur séché (si le procédé de préparation du catalyseur ne prévoit l'étape optionnelle e) de traitement thermique après l'étape d) de séchage) ou sur le catalyseur obtenu après l'étape e) de traitement thermique (si cette étape est réalisée).

De préférence, le catalyseur présente une faible microporosité, de manière très préférée il ne présente aucune microporosité.

### Description du procédé d'hydrogénation sélective de composés polyinsaturés

Le procédé d'hydrogénation sélective de composés polyinsaturés contenant au moins 2 atomes de carbone par molécule, tels que les dioléfines et/ou les acétyléniques et/ou les alcénylaromatiques, aussi appelés styréniques, contenus dans une charge d'hydrocarbures ayant un point d'ébullition final inférieur ou égal à 300°C, est réalisé à une température comprise entre 0 et 300°C, à une pression comprise entre 0,1 et 10 MPa, à un ratio molaire hydrogène/(composés polyinsaturés à hydrogéner) compris entre 0,1 et 10 et à une vitesse volumique horaire comprise entre 0,1 et 200 h⁻¹ lorsque le procédé est réalisé en phase liquide, ou à un ratio molaire hydrogène/(composés polyinsaturés à hydrogéner) compris entre 0,5 et 1000 et à une vitesse volumique horaire entre 100 et 40000 h⁻¹ lorsque le procédé est réalisé en phase gazeuse, en présence d'un catalyseur obtenu par le procédé de préparation tel que décrit ci-avant dans la description.

Les composés organiques mono-insaturés tels que par exemple l'éthylène et le propylène, sont à la source de la fabrication de polymères, de matières plastiques et d'autres produits chimiques à valeur ajoutée. Ces composés sont obtenus à partir du gaz naturel, du naphta ou du gazole qui ont été traités par des procédés de vapocraquage ou de craquage catalytique. Ces procédés sont opérés à haute température et produisent, en plus des composés mono-insaturés recherchés, des composés organiques polyinsaturés tels que l'acétylène, le propadiène et le méthylacétylène (ou propyne), le 1-2-butadiène et le 1-3-butadiène, le vinylacétylène et l'éthylacétylène, et d'autres composés polyinsaturés dont le point d'ébullition correspond à la coupe C5+ (composés hydrocarbonés ayant au moins 5 atomes de carbone), en particulier des composés dioléfiniques ou styréniques ou indéniques. Ces composés polyinsaturés sont très réactifs et conduisent à des réactions parasites dans les unités de polymérisation. Il est donc nécessaire de les éliminer avant de valoriser ces coupes.

L'hydrogénation sélective est le principal traitement développé pour éliminer spécifiquement les composés polyinsaturés indésirables de ces charges d'hydrocarbures. Elle permet la conversion des composés polyinsaturés vers les alcènes ou aromatiques correspondants en évitant leur saturation totale et donc la formation des alcanes ou naphtènes correspondants. Dans le cas d'essences de vapocraquage utilisées comme charge, l'hydrogénation sélective permet également d'hydrogéner sélectivement les alcénylaromatiques en aromatiques en évitant l'hydrogénation des noyaux aromatiques.

La charge d'hydrocarbures traitée dans le procédé d'hydrogénation sélective a un point d'ébullition final inférieur ou égal à 300°C et contient au moins 2 atomes de carbone par molécule et comprend au moins un composé polyinsaturé. On entend par « composés polyinsaturés » des composés comportant au moins une fonction acétylénique et/ou au moins une fonction diénique et/ou au moins une fonction alcénylaromatique.

Plus particulièrement, la charge est sélectionnée dans le groupe constitué par une coupe C2 de vapocraquage, une coupe C2-C3 de vapocraquage, une coupe C3 de vapocraquage, une coupe C4 de vapocraquage, une coupe C5 de vapocraquage et une essence de vapocraquage encore appelée essence de pyrolyse ou coupe C5+.

La coupe C2 de vapocraquage, avantageusement utilisée pour la mise en oeuvre du procédé d'hydrogénation sélective selon l'invention, présente par exemple la composition suivante : entre 40 et 95 % poids d'éthylène, de l'ordre de 0,1 à 5 % poids d'acétylène, le reste étant essentiellement de l'éthane et du méthane. Dans certaines coupes C2 de vapocraquage, entre 0,1 et 1 % poids de composés en C3 peut aussi être présent.

La coupe C3 de vapocraquage, avantageusement utilisée pour la mise en oeuvre du procédé d'hydrogénation sélective selon l'invention, présente par exemple la composition moyenne suivante : de l'ordre de 90 % poids de propylène, de l'ordre de 1 à 8 % poids de propadiène et de méthylacétylène, le reste étant essentiellement du propane. Dans certaines coupes C3, entre 0,1 et 2 % poids de composés en C2 et de composés en C4 peut aussi être présent.

Une coupe C2 - C3 peut aussi être avantageusement utilisée pour la mise en oeuvre du procédé d'hydrogénation sélective selon l'invention. Elle présente par exemple la composition suivante : de l'ordre de 0,1 à 5 % poids d'acétylène, de l'ordre de 0,1 à 3 % poids de propadiène et de méthylacétylène, de l'ordre de 30 % poids d'éthylène, de l'ordre de 5 % poids de propylène, le reste étant essentiellement du méthane, de l'éthane et du propane. Cette charge peut aussi contenir entre 0,1 et 2 % poids de composés en C4.

La coupe C4 de vapocraquage, avantageusement utilisée pour la mise en oeuvre du procédé d'hydrogénation sélective selon l'invention, présente par exemple la composition massique moyenne suivante : 1 % poids de butane, 46,5 % poids de butène, 51 % poids de butadiène, 1,3 % poids de vinylacétylène et 0,2 % poids de butyne. Dans certaines coupes C4, entre 0,1 et 2 % poids de composés en C3 et de composés en C5 peut aussi être présent. La coupe C5 de vapocraquage, avantageusement utilisée pour la mise en oeuvre du procédé d'hydrogénation sélective selon l'invention, présente par exemple la composition suivante : 21 % poids de pentanes, 45 % poids de pentènes, 34 % poids de pentadiènes.

L'essence de vapocraquage ou essence de pyrolyse, avantageusement utilisée pour la mise en oeuvre du procédé d'hydrogénation sélective selon l'invention, correspond à une coupe hydrocarbonée dont la température d'ébullition est généralement comprise entre 0 et 300°C, de préférence entre 10 et 250°C. Les hydrocarbures polyinsaturés à hydrogéner présents dans ladite essence de vapocraquage sont en particulier des composés dioléfiniques (butadiène, isoprène, cyclopentadiène...), des composés styréniques (styrène, alpha-méthylstyrène...) et des composés indéniques (indène...). L'essence de vapocraquage comprend généralement la coupe C5-C12 avec des traces de C3, C4, C13, C14, C15 (par exemple entre 0,1 et 3% poids pour chacune de ces coupes). Par exemple, une charge formée d'essence de pyrolyse a généralement une composition suivante: 5 à 30 % poids de composés saturés (paraffines et naphtènes), 40 à 80 % poids de composés aromatiques, 5 à 20 % poids de mono-oléfines, 5 à 40 % poids de dioléfines, 1 à 20 % poids de composés alcénylaromatiques, l'ensemble des composés formant 100 %. Elle contient également de 0 à 1000 ppm poids de soufre, de préférence de 0 à 500 ppm poids de soufre.

De manière préférée, la charge d'hydrocarbures polyinsaturés traitée conformément au procédé d'hydrogénation sélective est une coupe C2 de vapocraquage, ou une coupe C2-C3 de vapocraquage, ou une essence de vapocraquage.

Le procédé d'hydrogénation sélective vise à éliminer lesdits hydrocarbures polyinsaturés présents dans ladite charge à hydrogéner sans hydrogéner les hydrocarbures monoinsaturés. Par exemple, lorsque ladite charge est une coupe C2, le procédé d'hydrogénation sélective vise à hydrogéner sélectivement l'acétylène. Lorsque ladite charge est une coupe C3, le procédé d'hydrogénation sélective vise à hydrogéner sélectivement le propadiène et le méthylacétylène. Dans le cas d'une coupe C4, on vise à éliminer le butadiène, le vinylacétylène (VAC) et le butyne, dans le cas d'une coupe C5, on vise à éliminer les pentadiènes. Lorsque ladite charge est une essence de vapocraquage, le procédé d'hydrogénation sélective vise à hydrogéner sélectivement lesdits hydrocarbures polyinsaturés présents dans ladite charge à traiter de manière à ce que les composés dioléfiniques soient partiellement hydrogénés en mono-oléfines et que les composés styréniques et indéniques soient partiellement hydrogénés en composés aromatiques correspondants en évitant l'hydrogénation des noyaux aromatiques.

La mise en oeuvre technologique du procédé d'hydrogénation sélective est par exemple réalisée par injection, en courant ascendant ou descendant, de la charge d'hydrocarbures polyinsaturés et de l'hydrogène dans au moins un réacteur à lit fixe. Ledit réacteur peut être de type isotherme ou de type adiabatique. Un réacteur adiabatique est préféré. La charge d'hydrocarbures polyinsaturés peut avantageusement être diluée par une ou plusieurs ré-injection(s) de l'effluent, issu dudit réacteur où se produit la réaction d'hydrogénation sélective, en divers points du réacteur, situés entre l'entrée et la sortie du réacteur afin de limiter le gradient de température dans le réacteur. La mise en oeuvre technologique du procédé d'hydrogénation sélective peut également être avantageusement réalisée par l'implantation d'au moins dudit catalyseur supporté dans une colonne de distillation réactive ou dans des réacteurs - échangeurs ou dans un réacteur de type slurry. Le flux d'hydrogène peut être introduit en même temps que la charge à hydrogéner et/ou en un ou plusieurs points différents du réacteur.

L'hydrogénation sélective des coupes C2, C2-C3, C3, C4, C5 et C5+ de vapocraquage peut être réalisée en phase gazeuse ou en phase liquide, de préférence en phase liquide pour les coupes C3, C4, C5 et C5+ et en phase gazeuse pour les coupes C2 et C2-C3. Une réaction en phase liquide permet d'abaisser le coût énergétique et d'augmenter la durée de cycle du catalyseur.

D'une manière générale, l'hydrogénation sélective d'une charge d'hydrocarbures contenant des composés polyinsaturés contenant au moins 2 atomes de carbone par molécule et ayant un point d'ébullition final inférieur ou égal à 300°C s'effectue à une température comprise entre 0 et 300°C, à une pression comprise entre 0,1 et 10 MPa, à un ratio molaire hydrogène/(composés polyinsaturés à hydrogéner) compris entre 0,1 et 10 et à une vitesse volumique horaire V.V.H. (définie comme le rapport du débit volumique de charge sur le volume du catalyseur) comprise entre 0,1 et 200 h⁻¹ pour un procédé réalisé en phase liquide, ou à un ratio molaire hydrogène/(composés polyinsaturés à hydrogéner) compris entre 0,5 et 1000 et à une vitesse volumique horaire V.V.H. comprise entre 100 et 40000 h⁻¹ pour un procédé réalisé en phase gazeuse.

Lorsqu'on effectue un procédé d'hydrogénation sélective dans lequel la charge est une essence de vapocraquage comportant des composés polyinsaturés, le ratio molaire (hydrogène)/(composés polyinsaturés à hydrogéner) est généralement compris entre 0,5 et 10, de préférence entre 0,7 et 5,0 et de manière encore plus préférée entre 1,0 et 2,0, la température est comprise entre 0 et 200°C, de préférence entre 20 et 200 °C et de manière encore plus préférée entre 30 et 180°C, la vitesse volumique horaire (V.V.H.) est comprise généralement entre 0,5 et 100 h⁻¹, de préférence entre 1 et 50 h⁻¹ et la pression est généralement comprise entre 0,3 et 8,0 MPa, de préférence entre 1,0 et 7,0 MPa et de manière encore plus préférée entre 1,5 et 4,0 MPa. Plus préférentiellement, on effectue un procédé d'hydrogénation sélective dans lequel la charge est une essence de vapocraquage comportant des composés polyinsaturés, le ratio molaire hydrogène/(composés polyinsaturés à hydrogéner) est compris entre 0,7 et 5,0, la température est comprise entre 20 et 200 °C, la vitesse volumique horaire (V.V.H.) est comprise généralement entre 1 et 50 h⁻¹ et la pression est comprise entre 1,0 et 7,0 MPa.

Encore plus préférentiellement, on effectue un procédé d'hydrogénation sélective dans lequel la charge est une essence de vapocraquage comportant des composés polyinsaturés, le ratio molaire hydrogène/(composés polyinsaturés à hydrogéner) est compris entre 1,0 et 2,0, la température est comprise entre 30 et 180°C, la vitesse volumique horaire (V.V.H.) est comprise généralement entre 1 et 50 h⁻¹ et la pression est comprise entre 1,5 et 4,0 MPa. Le débit d'hydrogène est ajusté afin d'en disposer en quantité suffisante pour hydrogéner théoriquement l'ensemble des composés polyinsaturés et de maintenir un excès d'hydrogène en sortie de réacteur.

Lorsqu'on effectue un procédé d'hydrogénation sélective dans lequel la charge est une coupe C2 de vapocraquage et/ou une coupe C2-C3 de vapocraquage comportant des composés polyinsaturés, le ratio molaire (hydrogène)/(composés polyinsaturés à hydrogéner) est généralement compris entre 0,5 et 1000, de préférence entre 0,7 et 800, la température est comprise entre 0 et 300°C, de préférence entre 15 et 280 °C, la vitesse volumique horaire (V.V.H.) est comprise généralement entre 100 et 40000 h⁻¹, de préférence entre 500 et 30000 h⁻¹ et la pression est généralement comprise entre 0,1 et 6,0 MPa, de préférence entre 0,2 et 5,0 MPa.

### Description du procédé d'hydrogénation des aromatiques

Le procédé d'hydrogénation d'au moins un composé aromatique ou polyaromatique contenu dans une charge d'hydrocarbures ayant un point d'ébullition final inférieur ou égal à 650°C, généralement entre 20 et 650°C, et de préférence entre 20 et 450 °C est décrit. Ladite charge d'hydrocarbures contenant au moins un composé aromatique ou polyaromatique peut être choisi parmi les coupes pétrolières ou pétrochimiques suivantes : le reformat du reformage catalytique, le kérosène, le gazole léger, le gazole lourd, les distillats de craquage, tels que l'huile de recyclage de FCC, le gazole d'unité de cokéfaction, les distillats d'hydrocraquage.

La teneur en composés aromatiques ou polyaromatiques contenus dans la charge d'hydrocarbures traitée dans le procédé d'hydrogénation est généralement compris entre 0,1 et 80% en poids, de préférence entre 1 et 50% en poids, et de manière particulièrement préférée entre 2 et 35% en poids, le pourcentage étant basé sur le poids total de la charge d'hydrocarbures. Les composés aromatiques présents dans ladite charge d'hydrocarbures sont par exemple le benzène ou des alkylaromatiques tels que le toluène, l'éthylbenzène, l'o-xylène, le m-xylène, ou le p-xylène, ou encore des aromatiques ayant plusieurs noyaux aromatiques (polyaromatiques) tels que le naphtalène.

La teneur en soufre ou en chlore de la charge est généralement inférieure à 5000 ppm poids de soufre ou de chlore, de préférence inférieure à 100 ppm poids, et de manière particulièrement préférée inférieure à 10 ppm poids.

La mise en oeuvre technologique du procédé d'hydrogénation des composés aromatiques ou polyaromatiques est par exemple réalisée par injection, en courant ascendant ou descendant, de la charge d'hydrocarbures et de l'hydrogène dans au moins un réacteur à lit fixe. Ledit réacteur peut être de type isotherme ou de type adiabatique. Un réacteur adiabatique est préféré. La charge d'hydrocarbures peut avantageusement être diluée par une ou plusieurs ré-injection(s) de l'effluent, issu dudit réacteur où se produit la réaction d'hydrogénation des aromatiques, en divers points du réacteur, situés entre l'entrée et la sortie du réacteur afin de limiter le gradient de température dans le réacteur. La mise en oeuvre technologique du procédé d'hydrogénation des aromatiques peut également être avantageusement réalisée par l'implantation d'au moins dudit catalyseur supporté dans une colonne de distillation réactive ou dans des réacteurs - échangeurs ou dans un réacteur de type slurry. Le flux d'hydrogène peut être introduit en même temps que la charge à hydrogéner et/ou en un ou plusieurs points différents du réacteur. L'hydrogénation des composés aromatiques ou polyaromatiques peut être réalisée en phase gazeuse ou en phase liquide, de préférence en phase liquide. D'une manière générale, l'hydrogénation des composés aromatiques ou polyaromatiques s'effectue à une température comprise entre 30 et 350°C, de préférence entre 50 et 325°C, à une pression comprise entre 0,1 et 20 MPa, de préférence entre 0,5 et 10 MPa, à un ratio molaire hydrogène/(composés aromatiques à hydrogéner) entre 0,1 et 10 et à une vitesse volumique horaire V.V.H. comprise entre 0,05 et 50 h⁻¹, de préférence entre 0,1 et 10 h⁻¹ d'une charge d'hydrocarbures contenant des composés aromatiques ou polyaromatiques et ayant un point d'ébullition final inférieur ou égal à 650°C, généralement entre 20 et 650°C, et de préférence entre 20 et 450°C.

Le débit d'hydrogène est ajusté afin d'en disposer en quantité suffisante pour hydrogéner théoriquement l'ensemble des composés aromatiques et de maintenir un excès d'hydrogène en sortie de réacteur.

La conversion des composés aromatiques ou polyaromatiques est généralement supérieure à 20% en mole, de préférence supérieure à 40% en mole, de manière plus préférée supérieure à 80% en mole, et de manière particulièrement préférée supérieure à 90 % en mole des composés aromatiques ou polyaromatiques contenus dans la charge hydrocarbonée. La conversion se calcule en divisant la différence entre les moles totales des composés aromatiques ou polyaromatiques dans la charge d'hydrocarbures et dans le produit par les moles totales des composés aromatiques ou polyaromatiques dans la charge d'hydrocarbures.

Selon une variante particulière du procédé on réalise un procédé d'hydrogénation du benzène d'une charge d'hydrocarbures, tel que le reformat issu d'une unité de reformage catalytique. La teneur en benzène dans ladite charge d'hydrocarbures est généralement comprise entre 0,1 et 40% poids, de préférence entre 0,5 et 35% poids, et de manière particulièrement préférée entre 2 et 30% poids, le pourcentage en poids étant basé sur le poids total de la charge d'hydrocarbures.

La teneur en soufre ou en chlore de la charge est généralement inférieure à 10 ppm poids de soufre ou chlore respectivement, et de préférence inférieure à 2 ppm poids.

L'hydrogénation du benzène contenu dans la charge d'hydrocarbures peut être réalisée en phase gazeuse ou en phase liquide, de préférence en phase liquide. Lorsqu'elle est réalisée en phase liquide, un solvant peut être présent, tel que le cyclohexane, l'heptane, l'octane. D'une manière générale, l'hydrogénation du benzène s'effectue à une température comprise entre 30 et 250°C, de préférence entre 50 et 200°C, et de manière plus préférée entre 80 et 180°C, à une pression comprise entre 0,1 et 10 MPa, de préférence entre 0,5 et 4 MPa, à un ratio molaire hydrogène/(benzène) entre 0,1 et 10 et à une vitesse volumique horaire V.V.H. comprise entre 0,05 et 50 h⁻¹, de préférence entre 0,5 et 10 h⁻¹.

La conversion du benzène est généralement supérieure à 50% en mole, de préférence supérieure à 80% en mole, de manière plus préférée supérieure à 90% en mole et de manière particulièrement préférée supérieure à 98 % en mole.

L'invention est illustrée par les exemples qui suivent.

### Exemple 1 : Préparation d'une solution aqueuse de précurseurs de Ni

La solution aqueuse de précurseurs de Ni (solution S) utilisée pour la préparation des catalyseurs B et C est préparée en dissolvant 46,1 g de nitrate de nickel (Ni(NO₃)₂.6H₂O, fournisseur Strem Chemicals^{®}) dans un volume de 13 mL d'eau distillée. On obtient la solution S dont la concentration en NiO est de 20,1 % pds (par rapport à la masse de la solution).

### Exemple 2 : Préparation d'un oxyde poreux aluminique calciné (selon le mode de réalisation 2)

La synthèse de l'alumine A est réalisée dans un réacteur de laboratoire d'une capacité de 7000 mL environ. La synthèse se déroule à 70°C et sous agitation, en six étapes, nommées ci-dessous a1') à a6'). On cherche à préparer 5 L de solution à une concentration fixée à 27 g/L en alumine dans la suspension finale (obtenue à l'issue de l'étape a3') et avec un taux de contribution de la première étape (a1') à 2,1 % de l'alumine totale.
a1') Mise en solution : On introduit en une fois 70 mL de sulfate d'aluminium Al₂(SO₄)₃ dans le réacteur contenant un pied d'eau de 1679 mL. L'évolution du pH, qui reste compris entre 2,5 et 3, est suivie pendant 10 minutes. Cette étape contribue à l'introduction de 2,1 % d'alumine par rapport à la masse totale d'alumine formée à l'issue de la synthèse du gel. La solution est laissée sous agitation pendant une durée de 10 minutes.
A2') Ajustement du pH : On ajoute progressivement environ 70 mL d'aluminate de sodium NaAlOO. L'objectif est d'atteindre un pH compris entre 7 et 10 en une durée de 5 à 15 minutes.
a3') Coprécipitation : Dans la suspension obtenue à l'issue de l'étape a2') on ajoute en 30 minutes,
   - 1020 mL de sulfate d'aluminium Al₂(SO₄)₃, soit un débit de 34 mL/min,
   - 1020 mL d'aluminate de sodium NaAlOO, soit un débit de 34 mL/min,
   - 1150 mL d'eau distillée, soit un débit de 38,3 mL/min.

Le pH est compris entre 8,7 et 9,9.
a4') Filtration : La suspension obtenue à l'issue de l'étape a3') est filtrée par déplacement sur un outil de type Buchner fritté P4 et lavée plusieurs fois avec de l'eau distillée. On obtient un gel d'alumine.
a5') Séchage : Le gel d'alumine obtenu à l'issue de l'étape a4') est séché à l'étuve pendant 16 heures à 200 °C.
a6') Traitement thermique : La poudre obtenue à l'issue de l'étape a5') est ensuite calcinée sous flux d'air de 1 L/h/g de gel d'alumine à 750 °C pendant 2 heures pour obtenir la transition de la boehmite vers l'alumine. On obtient alors l'alumine A.

### Exemple 3 (comparatif) : Préparation d'un catalyseur B par imprégnation de nitrate de nickel sans additif

Le catalyseur B est préparé par imprégnation à sec de l'alumine A décrite dans l'exemple 2, avec la solution S de précurseurs de Ni.

La synthèse de l'alumine A est réalisée en suivant les six étapes, étapes a1') à a6'), de l'exemple 2 décrit ci-dessus. Les conditions opératoires sont strictement identiques. Cependant, une étape de mise en forme du gel d'alumine séché issu de l'étape a5') est insérée entre les étapes a5') et a6') : La mise en forme de cette poudre est réalisée sur malaxeur de type "Brabender" avec un taux d'acide de 1 % (taux d'acide total, exprimé par rapport à l'alumine sèche), un taux de neutralisation de 20 % et des pertes au feu acide et basique respectivement de 62 % et 64 %. Puis l'extrusion est effectuée sur une extrudeuse piston à travers une filière de diamètre 2,1 mm. Après extrusion, les extrudés sont séchés pendant 16 heures à 80 °C. A l'issue de l'étape a6') de calcination, on obtient des extrudés de l'alumine A.

La solution S préparée à l'exemple 1 est imprégnée à sec sur 10 g d'alumine A. Le solide ainsi obtenu est ensuite séché en étuve pendant 16 heures à 120°C, puis calciné sous un flux d'air de 1 L/h/g de catalyseur à 450°C pendant 2 heures.

Le catalyseur calciné B ainsi préparé contient 23,2 % en poids de l'élément nickel par rapport au poids total du catalyseur supporté sur alumine et il présente des cristallites d'oxyde de nickel dont le diamètre moyen (déterminé par diffraction des rayons X à partir de la largeur de la raie de diffraction située à l'angle 2thêta=43°) est de 15,6 nm. Les autres caractéristiques structurelles du catalyseur B sont répertoriées dans le tableau 1 ci-après.

### Exemple 4 (comparatif) : Préparation d'un catalyseur C par comalaxage sans additif

Le catalyseur C est préparé à partir de l'alumine A et de la solution S de précurseur de Ni, préparées ci-dessus, selon les quatre étapes suivantes :
Comalaxage : On utilise un malaxeur "Brabender" avec une cuve de 80 mL et une vitesse de malaxage de 30 tr/min. La poudre d'alumine A est placée dans la cuve du malaxeur. Puis la solution S de précurseurs de Ni est ajoutée au fur et à mesure à la seringue pendant environ 10 minutes à 15 tr/min tout en chauffant pour évacuer l'eau. Après l'obtention d'une pâte, le malaxage est maintenu 15 minutes à 50 tr/min.

Extrusion : La pâte ainsi obtenue est introduite dans une extrudeuse piston et est extrudée au travers d'une filière de diamètre 2,1 mm.

Séchage : Les extrudés ainsi obtenus sont ensuite séchés à l'étuve à 80 °C pendant 16 heures. On obtient un catalyseur séché.

Traitement thermique : Le catalyseur séché est ensuite calciné en four tubulaire, sous un flux d'air de 1 L/h/g de catalyseur, à 450 °C pendant 2 heures (rampe de montée en température de 5 °C/min).

On obtient alors le catalyseur calciné C qui contient 24,3% poids de l'élément nickel par rapport au poids total du catalyseur comalaxé et présente des cristallites d'oxyde de nickel dont le diamètre moyen est de 9,5 nm. Les autres caractéristiques structurelles du catalyseur C sont répertoriées dans le tableau 1 ci-après.

### Exemple 5 (comparatif) : Préparation d'un catalyseur D par co-imprégnation de nitrate de nickel et d'acide propanedioïque (acide malonique)

Le catalyseur D est préparé par co-imprégnation à sec de nitrate de nickel et d'acide malonique sur l'alumine A en utilisant un ratio molaire {acide malonique / nickel} égal à 0,6. Pour ce faire, une solution aqueuse S' est préparée en dissolvant 89,0 g de nitrate de nickel Ni(NO₃)₂.6H₂O (fournisseur Strem Chemicals^{®}) et 19,1 g d'acide malonique (CAS 141-82-2, fournisseur Fluka^{®}) dans 20 mL d'eau déminéralisée. Cette solution S' est ensuite imprégnée à sec sur 10 g d'alumine A préalablement mise en forme sous forme d'extrudés comme décrit ci-dessus à l'exemple 3. Le solide ainsi obtenu est ensuite séché en étuve pendant 16 heures à 120°C, puis calciné sous un flux d'air de 1 L/h/g de catalyseur à 450°C pendant 2 heures.

Le catalyseur calciné D ainsi préparé contient 22,9 % poids de l'élément nickel par rapport au poids total du catalyseur supporté sur alumine et il présente des cristallites d'oxyde de nickel dont le diamètre moyen est de 4,8 nm. Les autres caractéristiques structurelles du catalyseur D sont répertoriées dans le tableau 1 ci-après.

### Exemple 6 (conforme) : Préparation d'un catalyseur E par comalaxage en présence d'acide propanedioïque

Le catalyseur E est préparé à partir de l'alumine A et de la solution S' contenant le précurseur de Ni et l'acide propanedioïque, préparées ci-dessus, selon les quatre étapes suivantes :
Comalaxage : On utilise un malaxeur "Brabender" avec une cuve de 80 mL et une vitesse de malaxage de 30 tr/min. La poudre d'alumine A est placée dans la cuve du malaxeur. Puis la solution S' de précurseur de Ni et d'acide propanedioïque est ajoutée au fur et à mesure à la seringue pendant environ 10 minutes à 15 tr/min tout en chauffant pour évacuer l'eau. Après l'obtention d'une pâte, le malaxage est maintenu 15 minutes à 50 tr/min.

Extrusion : La pâte ainsi obtenue est introduite dans une extrudeuse piston et est extrudée au travers d'une filière de diamètre 2,1 mm.

Séchage : Les extrudés ainsi obtenus sont ensuite séchés à l'étuve à 80°C pendant 16 heures. On obtient un catalyseur séché.

Traitement thermique : Le catalyseur séché est ensuite calciné en four tubulaire, sous un flux d'air de 1 L/h/g de catalyseur, à 450°C pendant 2 heures (rampe de montée en température de 5 °C/min).

On obtient alors le catalyseur calciné E qui contient 27,7 % poids de l'élément nickel par rapport au poids total du catalyseur comalaxé et présente des cristallites d'oxyde de nickel dont le diamètre moyen est de 4,2 nm. Les autres caractéristiques structurelles du catalyseur E sont répertoriées dans le tableau 1 ci-après.

**Tableau 1 : Propriétés des catalyseurs B, C, D (non conforme au procédé de préparation selon l'invention), et E (conforme)**

| | B | C | D | E |
|---|---|---|---|---|
| | Comparatif | Comparatif | Comparatif | Conforme |
| Précurseur aluminique | Calciné | Calciné | Calciné | Calciné |
| Mode d'introduction du Ni | Imprégnation à sec | Comalaxage | Imprégnation à sec | Comalaxage |
| Additif utilisé | - | - | Acide malonique | Acide malonique |
| Ni (%pds) | 23,2 | 24,3 | 22,9 | 27,7 |
| Surface BET (m²/g) | 156 | 155 | 152 | 125 |
| Volume poreux total (mL/g) | 0,66 | 0,67 | 0,64 | 0,59 |
| Volume mésoporeux (mL/g) | 0,47 | 0,47 | 0,42 | 0,36 |
| Diamètre médian mésoporeux (nm) | 11,5 | 12,0 | 11,3 | 11,8 |
| Volume macro-poreux (mL/g et % du volume poreux total) | 0,19 | 0,20 | 0,19 | 0,23 |
| | 29% | 32% | 29% | 38% |
| Diamètre médian macroporeux (nm) | 638 | 435 | 610 | 360 |
| Volume microporeux (mL/g) | 0 | 0 | 0 | 0 |
| Taille des cristallites de NiO (nm) | 15,6 | 9,5 | 4,8 | 4,2 |

### Exemple 7 : Évaluation des propriétés catalytiques des catalyseurs B, C, D et E en hydrogénation sélective d'un mélange contenant du styrène et de l'isoprène

Les catalyseurs B, C, D et E décrits dans les exemples ci-dessus sont testés vis-à-vis de la réaction d'hydrogénation sélective d'un mélange contenant du styrène et de l'isoprène.

La composition de la charge à hydrogéner sélectivement est la suivante : 8 % pds styrène (fournisseur Sigma Aldrich^{®}, pureté 99%), 8 % pds isoprène (fournisseur Sigma Aldrich^{®}, pureté 99%), 84 % pds n-heptane (solvant) (fournisseur VWR^{®}, pureté > 99% chromanorm HPLC). Cette charge contient également des composés soufrés en très faible teneur : 10 ppm pds de soufre introduits sous forme de pentanethiol (fournisseur Fluka^{®}, pureté > 97%) et 100 ppm pds de soufre introduits sous forme de thiophène (fournisseur Merck^{®}, pureté 99%). Cette composition correspond à la composition initiale du mélange réactionnel. Ce mélange de molécules modèles est représentatif d'une essence de pyrolyse.

La réaction d'hydrogénation sélective est opérée dans un autoclave de 500 mL en acier inoxydable, muni d'une agitation mécanique à entraînement magnétique et pouvant fonctionner sous une pression maximale de 100 bar (10 MPa) et des températures comprises entre 5°C et 200°C.

Préalablement à son introduction dans l'autoclave, une quantité de 3 mL de catalyseur est réduite *ex situ* sous un flux d'hydrogène de 1 L/h/g de catalyseur, à 400 °C pendant 16 heures (rampe de montée en température de 1 °C/min), puis elle est transvasée dans l'autoclave, à l'abri de l'air. Après ajout de 214 mL de n-heptane (fournisseur VWR^{®}, pureté > 99% chromanorm HPLC), l'autoclave est fermé, purgé, puis pressurisé sous 35 bar (3,5 MPa) d'hydrogène, et porté à la température du test égale à 30°C. Au temps t=0, environ 30 g d'un mélange contenant du styrène, de l'isoprène, du n-heptane, du pentanethiol et du thiophène sont introduits dans l'autoclave. Le mélange réactionnel a alors la composition décrite ci-dessus et l'agitation est mise en route à 1600 tr/min. La pression est maintenue constante à 35 bar (3,5 MPa) dans l'autoclave à l'aide d'une bouteille réservoir située en amont du réacteur.

L'avancement de la réaction est suivi par prélèvement d'échantillons du milieu réactionnel à intervalles de temps réguliers : le styrène est hydrogéné en éthylbenzène, sans hydrogénation du cycle aromatique, et l'isoprène est hydrogéné en méthyl-butènes. Si la réaction est prolongée plus longtemps que nécessaire, les méthyl-butènes sont à leur tour hydrogénés en isopentane. La consommation d'hydrogène est également suivie au cours du temps par la diminution de pression dans une bouteille réservoir située en amont du réacteur. L'activité catalytique est exprimée en moles de H₂ consommées par minute et par gramme de Ni.

Les activités catalytiques mesurées pour les catalyseurs B, C, D et E sont reportées dans le Tableau 2 ci-dessous. Elles sont rapportées à l'activité catalytique mesurée pour le catalyseur B (A_{HYD1}).

**Tableau 2 : Comparaison des performances en hydrogénation sélective d'un mélange contenant du styrène et de l'isoprène (A_{HYD1}) et en hydrogénation du toluène (A_{HYD2})**

| Catalyseur | Additif utilisé | Mode d'introduction du Ni et de l'additif | %poids de NiO sur catalyseur final | Taille moyenne des cristallites de NiO (nm) | A_{HYD1} (%) | A_{HYD2} (%) |
|---|---|---|---|---|---|---|
| B (non conforme) | - | Imprégnation à sec | 23,2 | 15,6 | 100 | 100 |
| C (non conforme) | - | comalaxage | 24,3 | 9,5 | 176 | 190 |
| D (non conforme) | Acide malonique | Imprégnation à sec | 22,9 | 4,8 | 260 | 327 |
| E (conforme) | Acide malonique | comalaxage | 27,7 | 4,2 | 341 | 458 |

Ceci montre bien les performances améliorées du catalyseur E préparé selon l'invention et en particulier l'impact du recours à une étape de malaxage de la phase active en présence d'un additif organique plutôt qu'une étape d'imprégnation. En effet, le catalyseur D, bien qu'ayant des cristallites de NiO de taille sensiblement égales à celles du catalyseur E, a des performances catalytiques moins bonnes. De plus, l'ajout d'un composé organique spécifique lors de l'étape de malaxage permet d'obtenir des performances améliorées (par rapport à l'activité du catalyseur C non conforme étant préparé par un procédé sans ajout d'acide malonique lors de l'étape de malaxage). On note également la teneur élevée en élément nickel et les particules de Ni de très petite taille présentes sur le catalyseur E préparé selon l'invention par malaxage de la phase active en présence d'un additif organique.

### Exemple 8 : Évaluation des propriétés catalytiques des catalyseurs B, C, D et E en hydrogénation du toluène

Les catalyseurs B, C, D et E décrits dans les exemples ci-dessus sont également testés vis-à-vis de la réaction d'hydrogénation du toluène.

La réaction d'hydrogénation sélective est opérée dans le même autoclave que celui décrit à l'exemple 6.

Préalablement à son introduction dans l'autoclave, une quantité de 2 mL de catalyseur est réduite *ex situ* sous un flux d'hydrogène de 1 L/h/g de catalyseur, à 400°C pendant 16 heures (rampe de montée en température de 1°C/min), puis elle est transvasée dans l'autoclave, à l'abri de l'air. Après ajout de 216 mL de n-heptane (fournisseur VWR^{®}, pureté > 99% chromanorm HPLC), l'autoclave est fermé, purgé, puis pressurisé sous 35 bar (3,5 MPa) d'hydrogène, et porté à la température du test égale à 80°C. Au temps t=0, environ 26 g de toluène (fournisseur SDS^{®}, pureté > 99,8%) sont introduits dans l'autoclave (la composition initiale du mélange réactionnel est alors toluène 6 % pds / n-heptane 94 % pds) et l'agitation est mise en route à 1600 tr/min. La pression est maintenue constante à 35 bar (3,5 MPa) dans l'autoclave à l'aide d'une bouteille réservoir située en amont du réacteur.

L'avancement de la réaction est suivi par prélèvement d'échantillons du milieu réactionnel à intervalles de temps réguliers : le toluène est totalement hydrogéné en méthylcyclohexane. La consommation d'hydrogène est également suivie au cours du temps par la diminution de pression dans une bouteille réservoir située en amont du réacteur. L'activité catalytique est exprimée en moles de H₂ consommées par minute et par gramme de Ni.

Les activités catalytiques mesurées pour les catalyseurs B, C, D et E sont reportées dans le tableau 2 ci-avant. Elles sont rapportées à l'activité catalytique mesurée pour le catalyseur B (A_{HYD2}).

Ceci montre bien les performances améliorées du catalyseur E préparé selon l'invention et en particulier l'impact du recours à une étape de malaxage de la phase active en présence d'un additif organique plutôt qu'une étape d'imprégnation. En effet, le catalyseur D, bien qu'ayant des cristallites de NiO de taille sensiblement égales à celles du catalyseur E, a des performances catalytiques moins bonnes. De plus, l'ajout d'un composé organique spécifique lors de l'étape de malaxage permet d'obtenir des performances améliorées (par rapport à l'activité du catalyseur C non conforme étant préparé par un procédé sans ajout d'acide malonique lors de l'étape de malaxage). On note également la teneur élevée en élément nickel et les particules de Ni de très petite taille présentes sur le catalyseur E préparé selon l'invention par malaxage de la phase active en présence d'un additif organique.

## Revendications

1. Procédé de préparation d'un catalyseur comprenant une matrice oxyde ayant une teneur en alumine calcinée supérieure ou égale à 90% poids par rapport au poids total de ladite matrice, et une phase active comprenant du nickel, ladite phase active ne comprenant pas de métal du groupe VIB, la teneur en nickel étant comprise entre 1 et 65% en poids dudit élément par rapport au poids total du catalyseur, ladite phase active se présentant sous la forme de particules de nickel ayant un diamètre inférieur ou égal à 18 nm, ledit catalyseur comprenant un volume poreux total mesuré par porosimétrie au mercure supérieur à 0,10 mL/g, un volume mésoporeux mesuré par porosimétrie au mercure supérieur à 0,10 mL/g, un volume macroporeux mesuré par porosimétrie au mercure inférieur ou égal à 0,6 ml/g, un diamètre médian mésoporeux compris entre 3 et 25 nm, un diamètre médian macroporeux compris entre 50 et 1500 nm, et une surface spécifique SBET compris entre 20 et 400 m²/g, lequel procédé comprend les étapes suivantes :
a) on prépare un oxyde poreux aluminique calciné ;
b) on malaxe l'oxyde poreux aluminique calciné obtenu à l'étape a) avec une solution résultant d'un mélange d'une ou plusieurs solution(s) aqueuse(s) comprenant au moins un précurseur de nickel, ledit précurseur de nickel étant le nitrate de nickel, et au moins une solution comprenant au moins un composé organique comprenant au moins une fonction acide carboxylique choisi parmi l'acide éthanedioïque (acide oxalique), l'acide propanedioïque (acide malonique), l'acide pentanedioïque (acide glutarique), l'acide hydroxyacétique (acide glycolique), l'acide 2-hydroxypropanoïque (acide lactique), l'acide 2-hydroxypropanedioïque (acide tartronique), l'acide 2-hydroxypropane-1,2,3-tricarboxylique (acide citrique), l'acide 2,3-dihydroxybutanedioïque (acide tartrique), l'acide 2-oxopropanoïque (acide pyruvique), l'acide 4-oxopentanoïque (acide lévulinique), pour obtenir une pâte, le rapport molaire entre ledit composé organique et l'élément nickel étant compris entre 0,01 et 5,0 mol/mol ;
c) on met en forme la pâte obtenue à l'étape b) ;
d) on sèche la pâte mise en forme obtenue à l'étape c) à une température inférieure à 250°C pour obtenir un catalyseur séché ;
e) éventuellement, on réalise un traitement thermique du catalyseur séché obtenu à l'étape d) à une température comprise entre 250 et 1000°C, en présence ou non d'eau.

2. Procédé selon la revendication 1, dans lequel ledit oxyde poreux aluminique calciné selon l'étape a) est obtenu par les étapes suivantes :
a1) une première étape de précipitation, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la première étape compris entre 5 et 13%, le taux d'avancement étant défini comme étant la proportion d'alumine formée en équivalent Al₂0₃ lors de ladite première étape de précipitation par rapport à la quantité totale d'alumine formée à l'issue de l'étape a3) du procédé de préparation, ladite étape opérant à une température comprise entre 20 et 90°C et pendant une durée comprise entre 2 minutes et 30 minutes;
a2) une étape de chauffage de la suspension à une température comprise entre 40 et 90°C pendant une durée comprise entre 7 minutes et 45 minutes,
a3) une deuxième étape de précipitation de la suspension obtenue à l'issue de l'étape de chauffage a2) par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, dans lequel au moins un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de la deuxième étape compris entre 87 et 95 %, le taux d'avancement étant défini comme étant la proportion d'alumine formée en équivalent Al₂0₃ lors de ladite deuxième étape de précipitation par rapport à la quantité totale d'alumine formée à l'issue de l'étape a3) du procédé de préparation, ladite étape opérant à une température comprise entre 40 et 90 °C et pendant une durée comprise entre 2 minutes et 50 minutes ;
a4) une étape de filtration de la suspension obtenue à l'issue de l'étape a3) de deuxième précipitation pour obtenir un gel d'alumine ;
a5) une étape de séchage dudit gel d'alumine obtenu à l'étape a4) pour obtenir une poudre ;
a6) une étape de traitement thermique de la poudre obtenue à l'issue de l'étape a5) entre 500 et 1000°C, pendant une durée comprise entre 2 et 10 h, en présence ou non d'un flux d'air contenant jusqu'à 60% volume d'eau pour obtenir un oxyde poreux aluminique calciné.

3. Procédé selon la revendication 1, dans lequel ledit oxyde poreux aluminique calciné selon l'étape a) est obtenu par les étapes suivantes :
a1') une étape de mise en solution d'un précurseur acide d'aluminium choisi parmi le sulfate d'aluminium, le chlorure d'aluminium et le nitrate d'aluminium dans l'eau, à une température comprise entre 20 et 90°C, à un pH compris entre 0,5 et 5, pendant une durée comprise entre 2 et 60 minutes,
a2') une étape d'ajustement du pH par ajout dans la suspension obtenue à l'étape a1') d'au moins un précurseur basique choisi parmi l'aluminate de sodium, l'aluminate de potassium, l'ammoniaque, l'hydroxyde de sodium et l'hydroxyde de potassium, à une température comprise entre 20 et 90°C, et à un pH compris entre 7 et 10, pendant une durée comprise entre 5 et 30 minutes,
a3') une étape de coprécipitation de la suspension obtenue à l'issue de l'étape a2') par ajout dans la suspension d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique et l'acide nitrique, au moins un des précurseurs basique ou acide comprenant de l'aluminium, le débit relatif des précurseurs acide et basique étant choisi de manière à obtenir un pH du milieu réactionnel compris entre 7 et 10 et le débit du ou des précurseurs acide et basique contenant de l'aluminium étant réglé de manière à obtenir une concentration en alumine finale dans la suspension comprise entre 10 et 38 g/L,
a4') une étape de filtration de la suspension obtenue à l'issue de l'étape a3') de coprécipitation pour obtenir un gel d'alumine,
a5') une étape de séchage dudit gel d'alumine obtenu à l'étape a4') pour obtenir une poudre,
a6') une étape de traitement thermique de la poudre obtenue à l'issue de l'étape a5') à une température comprise entre 500 et 1000°C, en présence ou non d'un flux d'air contenant jusqu'à 60% en volume d'eau, pendant une durée comprise entre 2 et 10 heures, pour obtenir un oxyde poreux aluminique calciné.

4. Procédé selon la revendication 1, dans lequel ledit oxyde poreux aluminique calciné selon l'étape a) est obtenu par les étapes suivantes :
a1") au moins une première étape de précipitation d'alumine, en milieu réactionnel aqueux, d'au moins un précurseur basique choisi parmi l'aluminate de sodium, l'aluminate de potassium, l'ammoniaque, l'hydroxyde de sodium et l'hydroxyde de potassium et d'au moins un précurseur acide choisi parmi le sulfate d'aluminium, le chlorure d'aluminium, le nitrate d'aluminium, l'acide sulfurique, l'acide chlorhydrique, et l'acide nitrique, dans laquelle au moins l'un des précurseurs basique ou acide comprend de l'aluminium, le débit relatif des précurseurs acide et basique est choisi de manière à obtenir un pH du milieu réactionnel compris entre 8,5 et 10,5 et le débit du ou des précurseurs acide et basique contenant de l'aluminium est réglé de manière à obtenir un taux d'avancement de ladite première étape compris entre 40 et 100%, le taux d'avancement étant défini comme étant la proportion d'alumine formée en équivalent Al2O3 lors de ladite première étape de précipitation par rapport à la quantité totale d'alumine formée à l'issue de l'étape c) du procédé de préparation, ladite première étape de précipitation opérant à une température comprise entre 10 et 50 °C, et pendant une durée comprise entre 2 minutes et 30 minutes ;
a2") une étape de traitement thermique de la suspension chauffée à une température comprise entre 50 et 200°C pendant une durée comprise entre 30 minutes et 5 heures permettant l'obtention d'un gel d'alumine ;
a3") une étape de filtration de la suspension obtenue à l'issue de l'étape a2") de traitement thermique, suivie d'au moins une étape de lavage du gel obtenu ;
a4") une étape de séchage du gel d'alumine obtenu à l'issue de l'étape a3") pour obtenir une poudre ;
a5") une étape de traitement thermique de la poudre obtenue à l'issue de l'étape a4") à une température comprise entre 500 et 1000°C, en présence ou non d'un flux d'air contenant jusqu'à 60% en volume d'eau, pour obtenir un oxyde poreux aluminique calciné.

## Patentansprüche

1. Verfahren zur Herstellung eines Katalysators, der eine Oxidmatrix mit einem Gehalt an calciniertem Aluminiumoxid größer oder gleich 90 Gew.-%, bezogen auf das Gesamtgewicht der Matrix, und eine Nickel umfassende aktive Phase umfasst, wobei die aktive Phase kein Metall der Gruppe VIB umfasst, wobei der Nickelgehalt zwischen 1 und 65 Gew.-% des Elements, bezogen auf das Gesamtgewicht des Katalysators, liegt, wobei die aktive Phase in Form von Nickelteilchen mit einem Durchmesser kleiner oder gleich 18 nm vorliegt, wobei der Katalysator ein durch Quecksilberporosimetrie gemessenes Gesamtporenvolumen von mehr als 0,10 ml/g, ein durch Quecksilberporosimetrie gemessenes Mesoporenvolumen von mehr als 0,10 ml/g, ein durch Quecksilberporosimetrie gemessenes Makroporenvolumen kleiner oder gleich 0,6 ml/g, einen Mesoporen-Mediandurchmesser zwischen 3 und 25 nm, einen Makroporen-Mediandurchmesser zwischen 50 und 1500 nm und eine spezifische Oberfläche SBET zwischen 20 und 400 m²/g umfasst, wobei das Verfahren die folgenden Schritte umfasst:
a) Herstellen eines calcinierten porösen Aluminiumoxids;
b) Kneten des in Schritt a) erhaltenen calcinierten porösen Aluminiumoxids mit einer aus dem Mischen einer oder mehrerer wässriger Lösungen, die mindestens einen Nickelvorläufer umfassen, wobei es sich bei dem Nickelvorläufer um Nickelnitrat handelt, und mindestens einer Lösung, die mindestens eine organische Verbindung mit mindestens einer Carbonsäurefunktion, die aus Ethandisäure (Oxalsäure), Propandisäure (Malonsäure), Pentandisäure (Glutarsäure), Hydroxyessigsäure (Glykolsäure), 2-Hydroxypropansäure (Milchsäure), 2-Hydroxypropandisäure (Tartronsäure), 2-Hydroxypropan-1,2,3-tricarbonsäure (Citronensäure), 2,3-Dihydroxybutandisäure (Weinsäure), 2-Oxopropansäure (Brenztraubensäure) und 4-Oxopentansäure (Lävulinsäure) ausgewählt ist, umfasst, resultierenden Lösung zum Erhalt einer Paste, wobei das Molverhältnis zwischen der organischen Verbindung und dem Nickelelement zwischen 0,01 und 5,0 mol/mol liegt;
c) Formen der in Schritt b) erhaltenen Paste;
d) Trocknen der in Schritt c) erhaltenen geformten Paste bei einer Temperatur von weniger als 250 °C zum Erhalt eines getrockneten Katalysators;
e) gegebenenfalls Durchführen einer Wärmebehandlung des in Schritt d) erhaltenen getrockneten Katalysators bei einer Temperatur zwischen 250 und 1000 °C in An- oder Abwesenheit von Wasser.

2. Verfahren nach Anspruch 1, wobei das calcinierte poröse Aluminiumoxid gemäß Schritt a) durch die folgenden Schritte erhalten wird:
a1) einen ersten Schritt des Ausfällens von mindestens einem basischen Vorläufer, der aus Natriumaluminat, Kaliumaluminat, wässrigem Ammoniak, Natriumhydroxid und Kaliumhydroxid ausgewählt wird, und mindestens einem sauren Vorläufer, der aus Aluminiumsulfat, Aluminiumchlorid, Aluminiumnitrat, Schwefelsäure, Salzsäure und Salpetersäure ausgewählt wird, in einem wässrigen Reaktionsmedium, wobei mindestens einer der basischen oder sauren Vorläufer Aluminium umfasst, die relative Strömungsrate der sauren und basischen Vorläufer so gewählt wird, dass sich ein pH-Wert des Reaktionsmediums zwischen 8,5 und 10,5 ergibt, und die Strömungsrate des bzw. der Aluminium enthaltenden sauren oder basischen Vorläufer so geregelt wird, dass sich ein Fortschrittsgrad des ersten Schritts zwischen 5 und 13 % ergibt, wobei der Fortschrittsgrad als das Verhältnis von während des ersten Ausfällungsschritts gebildetem Aluminiumoxid als Al₂O₃-Äquivalent, bezogen auf die am Ende von Schritt a3) des Herstellungsverfahrens gebildete Gesamtmenge von Aluminiumoxid, definiert ist, wobei der Schritt bei einer Temperatur zwischen 20 und 90 °C und über einen Zeitraum zwischen 2 Minuten und 30 Minuten durchgeführt wird;
a2) einen Schritt des Erhitzens der Suspension auf eine Temperatur zwischen 40 und 90 °C über einen Zeitraum zwischen 7 Minuten und 45 Minuten;
a3) einen zweiten Schritt des Ausfällens der am Ende des Erhitzungsschritts a2) erhaltenen Suspension durch Zugabe von mindestens einem basischen Vorläufer, der aus Natriumaluminat, Kaliumaluminat, wässrigem Ammoniak, Natriumhydroxid und Kaliumhydroxid ausgewählt wird, und mindestens einem sauren Vorläufer, der aus Aluminiumsulfat, Aluminiumchlorid, Aluminiumnitrat, Schwefelsäure, Salzsäure und Salpetersäure ausgewählt wird, zu der Suspension, wobei mindestens einer der basischen oder sauren Vorläufer Aluminium umfasst, die relative Strömungsrate der sauren und basischen Vorläufer so gewählt wird, dass sich ein pH-Wert des Reaktionsmediums zwischen 8,5 und 10,5 ergibt, und die Strömungsrate des bzw. der Aluminium enthaltenden sauren oder basischen Vorläufer so geregelt wird, dass sich ein Fortschrittsgrad des zweiten Schritts zwischen 87 und 95 % ergibt, wobei der Fortschrittsgrad als das Verhältnis von während des zweiten Ausfällungschritts gebildetem Aluminiumoxid als Al₂O₃-Äquivalent, bezogen auf die am Ende von Schritt a3) des Herstellungsverfahrens gebildete Gesamtmenge von Aluminiumoxid, definiert ist, wobei der Schritt bei einer Temperatur zwischen 40 und 90 °C und über einen Zeitraum zwischen 2 Minuten und 50 Minuten durchgeführt wird;
a4) einen Schritt des Filtrierens der am Ende von Schritt a3) der zweiten Ausfällung erhaltenen Suspension zum Erhalt eines Aluminiumoxidgels;
a5) einen Schritt des Trocknens des in Schritt a4) erhaltenen Aluminiumoxidgels zum Erhalt eines Pulvers;
a6) einen Schritt der Wärmebehandlung des am Ende von Schritt a5) erhaltenen Pulvers zwischen 500 und 1000 °C über einen Zeitraum zwischen 2 und 10 h in An- oder Abwesenheit eines Luftstroms, der bis zu 60 Vol.-% Wasser enthält, zum Erhalt eines calcinierten porösen Aluminiumoxids.

3. Verfahren nach Anspruch 1, wobei das calcinierte poröse Aluminiumoxid gemäß Schritt a) durch die folgenden Schritte erhalten wird:
a1') einen Schritt des Lösens eines sauren Aluminiumvorläufers, der aus Aluminiumsulfat, Aluminiumchlorid und Aluminiumnitrat ausgewählt wird, in Wasser bei einer Temperatur zwischen 20 und 90 °C und bei einem pH-Wert zwischen 0,5 und 5 über einen Zeitraum zwischen 2 und 60 Minuten,
a2') einen Schritt des Einstellens des pH-Werts durch Zugabe von mindestens einem basischen Vorläufer, der aus Natriumaluminat, Kaliumaluminat, wässrigem Ammoniak, Natriumhydroxid und Kaliumhydroxid ausgewählt wird, bei einer Temperatur zwischen 20 und 90 °C und bei einem pH-Wert zwischen 7 und 10 über einen Zeitraum zwischen 5 und 30 Minuten zu der in Schritt a1') erhaltenen Suspension,
a3') einen Schritt des gemeinsamen Ausfällens der am Ende von Schritt a2') erhaltenen Suspension durch Zugabe von mindestens einem basischen Vorläufer, der aus Natriumaluminat, Kaliumaluminat, wässrigem Ammoniak, Natriumhydroxid und Kaliumhydroxid ausgewählt wird, und mindestens einem sauren Vorläufer, der aus Aluminiumsulfat, Aluminiumchlorid, Aluminiumnitrat, Schwefelsäure, Salzsäure und Salpetersäure ausgewählt wird, zu der Suspension, wobei mindestens einer der basischen oder sauren Vorläufer Aluminium umfasst, die relative Strömungsrate der sauren und basischen Vorläufer so gewählt wird, dass sich ein pH-Wert des Reaktionsmediums zwischen 7 und 10 ergibt und die Strömungsrate des bzw. der Aluminium enthaltenden sauren oder basischen Vorläufer so geregelt wird, dass sich eine Endkonzentration an Aluminiumoxid in der Suspension zwischen 10 und 38 g/l ergibt,
a4') einen Schritt des Filtrierens der am Ende von Schritt a3') des gemeinsamen Ausfällens erhaltenen Suspension zum Erhalt eines Aluminiumoxidgels;
a5') einen Schritt des Trocknens des in Schritt a4') erhaltenen Aluminiumoxidgels zum Erhalt eines Pulvers;
a6') einen Schritt der Wärmebehandlung des am Ende von Schritt a5') erhaltenen Pulvers bei einer Temperatur zwischen 500 und 1000 °C in An- oder Abwesenheit eines Luftstroms, der bis zu 60 Vol.-% Wasser enthält, über einen Zeitraum zwischen 2 und 10 h zum Erhalt eines calcinierten porösen Aluminiumoxids.

4. Verfahren nach Anspruch 1, wobei das calcinierte poröse Aluminiumoxid gemäß Schritt a) durch die folgenden Schritte erhalten wird:
a1") mindestens einen ersten Schritt des Ausfällens von Aluminiumoxid aus mindestens einem basischen Vorläufer, der aus Natriumaluminat, Kaliumaluminat, wässrigem Ammoniak, Natriumhydroxid und Kaliumhydroxid ausgewählt wird, und mindestens einem sauren Vorläufer, der aus Aluminiumsulfat, Aluminiumchlorid, Aluminiumnitrat, Schwefelsäure, Salzsäure und Salpetersäure ausgewählt wird, in einem wässrigen Reaktionsmedium, wobei mindestens einer der basischen oder sauren Vorläufer Aluminium umfasst, die relative Strömungsrate der sauren und basischen Vorläufer so gewählt wird, dass sich ein pH-Wert des Reaktionsmediums zwischen 8,5 und 10,5 ergibt, und die Strömungsrate des bzw. der Aluminium enthaltenden sauren oder basischen Vorläufer so geregelt wird, dass sich ein Fortschrittsgrad des ersten Schritts zwischen 40 und 100 % ergibt, wobei der Fortschrittsgrad als das Verhältnis von während des ersten Ausfällungschritts gebildetem Aluminiumoxid als Al₂O₃-Äquivalent, bezogen auf die am Ende von Schritt c) des Herstellungsverfahrens gebildete Gesamtmenge von Aluminiumoxid, definiert ist, wobei der erste Ausfällungsschritt bei einer Temperatur zwischen 10 und 50 °C und über einen Zeitraum zwischen 2 Minuten und 30 Minuten durchgeführt wird;
a2") einen Schritt der Wärmebehandlung der auf eine Temperatur zwischen 50 und 200 °C erhitzten Suspension über einen Zeitraum zwischen 30 Minuten und 5 Stunden, wodurch ein Aluminiumoxidgel erhalten werden kann;
a3") einen Schritt des Filtrierens der am Ende des Wärmebehandlungsschritts a2") erhaltenen Suspension gefolgt von einem Schritt des Waschens des erhaltenen Gels;
a4") einen Schritt des Trocknens des in Schritt a3") erhaltenen Aluminiumoxidgels zum Erhalt eines Pulvers;
a5") einen Schritt der Wärmebehandlung des am Ende von Schritt a4") erhaltenen Pulvers bei einer Temperatur zwischen 500 und 1000 °C in An- oder Abwesenheit eines Luftstroms, der bis zu 60 Vol.-% Wasser enthält, zum Erhalt eines calcinierten porösen Aluminiumoxids.

## Claims

1. Process for the preparation of a catalyst comprising an oxide matrix having a content of calcined alumina of greater than or equal to 90% by weight, with respect to the total weight of said matrix, and an active phase comprising nickel, said active phase not comprising a metal from Group VIb, the content of nickel being of between 1% and 65% by weight, of said element, with respect to the total weight of the catalyst, said active phase being provided in the form of nickel particles having a diameter of less than or equal to 18 nm, the said catalyst comprising a total pore volume, measured by mercury porosimetry, of greater than 0.10 ml/g, a mesopore volume, measured by mercury porosimetry, of greater than 0.10 ml/g, a macropore volume, measured by mercury porosimetry, of less than or equal to 0.6 ml/g, a median mesopore diameter of between 3 and 25 nm, a median macropore diameter of between 50 and 1500 nm, and a specific surface S_{BET} of between 20 and 400 m²/g, which process comprises the following stages:
a) a calcined porous aluminium oxide is prepared;
b) the calcined porous aluminium oxide obtained in stage a) is kneaded with a solution resulting from the mixing of one or more aqueous solutions comprising at least one nickel precursor, said nickel precursor being nickel nitrate, and at least one solution comprising at least one organic compound comprising at least one carboxylic acid function chosen from ethanedioic acid (oxalic acid), propanedioic acid (malonic acid), pentanedioic acid (glutaric acid), hydroxyacetic acid (glycolic acid), 2-hydroxypropanoic acid (lactic acid), 2-hydroxypropanedioic acid (tartronic acid), 2-hydroxypropane-1,2,3-tricarboxylic acid (citric acid), 2,3-dihydroxybutanedioic acid (tartaric acid), 2-oxopropanoic acid (pyruvic acid) or 4-oxopentanoic acid (levulinic acid), in order to obtain a paste, the molar ratio of said organic compound to the nickel element being of between 0.01 and 5.0 mol/mol;
c) the paste obtained in stage b) is shaped;
d) the shaped paste obtained in stage c) is dried at a temperature of less than 250°C in order to obtain a dried catalyst;
e) optionally, a heat treatment of the dried catalyst obtained in stage d) is carried out at a temperature of between 250 and 1000°C, in the presence or absence of water.

2. Process according to Claim 1, in which the said calcined porous aluminium oxide according to stage a) is obtained by the following stages:
a1) a first stage of precipitation, in an aqueous reaction medium, of at least one basic precursor chosen from sodium aluminate, potassium aluminate, ammonia, sodium hydroxide and potassium hydroxide and of at least one acidic precursor chosen from aluminium sulfate, aluminium chloride, aluminium nitrate, sulfuric acid, hydrochloric acid and nitric acid, in which at least one of the basic or acidic precursors comprises aluminium, the relative flow rates of the acidic and basic precursors being chosen so as to obtain a pH of the reaction medium of between 8.5 and 10.5 and the flow rates of the acidic and basic precursor or precursors containing aluminium being adjusted so as to obtain a degree of progression of the first stage of between 5% and 13%, the degree of progression being defined as being the proportion of alumina formed as Al₂O₃ equivalent during the said first precipitation stage, with respect to the total amount of alumina formed on conclusion of stage a3) of the preparation process, the said stage being carried out at a temperature of between 20 and 90°C and for a period of time of between 2 minutes and 30 minutes;
a2) a stage of heating the suspension at a temperature of between 40 and 90°C for a period of time of between 7 minutes and 45 minutes;
a3) a second stage of precipitation of the suspension obtained on conclusion of the heating stage a2) by addition, to the suspension, of at least one basic precursor chosen from sodium aluminate, potassium aluminate, ammonia, sodium hydroxide and potassium hydroxide and of at least one acidic precursor chosen from aluminium sulfate, aluminium chloride, aluminium nitrate, sulfuric acid, hydrochloric acid and nitric acid, in which at least one of the basic or acidic precursors comprises aluminium, the relative flow rates of the acidic and basic precursors being chosen so as to obtain a pH of the reaction medium of between 8.5 and 10.5 and the flow rates of the acidic and basic precursor or precursors containing aluminium being adjusted so as to obtain a degree of progression of the second stage of between 87% and 95%, the degree of progression being defined as being the proportion of alumina formed as Al₂O₃ equivalent during the said second precipitation stage, with respect to the total amount of alumina formed on conclusion of stage a3) of the preparation process, the said stage being carried out at a temperature of between 40 and 90°C and for a period of time of between 2 minutes and 50 minutes;
a4) a stage of filtration of the suspension obtained on conclusion of the second precipitation stage a3) in order to obtain an alumina gel;
a5) a stage of drying the said alumina gel obtained in stage a4) in order to obtain a powder;
a6) a stage of heat treatment of the powder obtained on conclusion of stage a5) at between 500 and 1000°C, for a period of time of between 2 and 10 h, in the presence or absence of a stream of air containing up to 60% by volume of water, in order to obtain a calcined porous aluminium oxide.

3. Process according to Claim 1, in which the said calcined porous aluminium oxide according to stage a) is obtained by the following stages:
a1') a stage of dissolving an acidic aluminium precursor chosen from aluminium sulfate, aluminium chloride and aluminium nitrate in water, at a temperature of between 20 and 90°C, at a pH of between 0.5 and 5, for a period of time of between 2 and 60 minutes,
a2') a stage of adjustment of the pH by addition, to the suspension obtained in stage a1'), of at least one basic precursor chosen from sodium aluminate, potassium aluminate, ammonia, sodium hydroxide and potassium hydroxide, at a temperature of between 20 and 90°C and at a pH of between 7 and 10, for a period of time of between 5 and 30 minutes,
a3') a stage of coprecipitation of the suspension obtained on conclusion of stage a2') by addition, to the suspension, of at least one basic precursor chosen from sodium aluminate, potassium aluminate, ammonia, sodium hydroxide and potassium hydroxide and of at least one acidic precursor chosen from aluminium sulfate, aluminium chloride, aluminium nitrate, sulfuric acid, hydrochloric acid and nitric acid, at least one of the basic or acidic precursors comprising aluminium, the relative flow rates of the acidic and basic precursors being chosen so as to obtain a pH of the reaction medium of between 7 and 10 and the flow rates of the acidic and basic precursor or precursors containing aluminium being adjusted so as to obtain a final concentration of alumina in the suspension of between 10 and 38 g/l,
a4') a stage of filtration of the suspension obtained on conclusion of the coprecipitation stage a3') in order to obtain an alumina gel,
a5') a stage of drying the said alumina gel obtained in stage a4') in order to obtain a powder,
a6') a stage of heat treatment of the powder obtained on conclusion of stage a5') at a temperature of between 500 and 1000°C, in the presence or absence of a stream of air containing up to 60% by volume of water, for a period of time of between 2 and 10 hours, in order to obtain a calcined porous aluminium oxide.

4. Process according to Claim 1, in which the said calcined porous aluminium oxide according to stage a) is obtained by the following stages:
a1") at least one first stage of precipitation of alumina, in an aqueous reaction medium, from at least one basic precursor chosen from sodium aluminate, potassium aluminate, ammonia, sodium hydroxide and potassium hydroxide and from at least one acidic precursor chosen from aluminium sulfate, aluminium chloride, aluminium nitrate, sulfuric acid, hydrochloric acid and nitric acid, in which at least one of the basic or acidic precursors comprises aluminium, the relative flow rates of the acidic and basic precursors being chosen so as to obtain a pH of the reaction medium of between 8.5 and 10.5 and the flow rates of the acidic and basic precursor or precursors containing aluminium being adjusted so as to obtain a degree of progression of the said first stage of between 40% and 100%, the degree of progression being defined as being the proportion of alumina formed as Al₂O₃ equivalent during the said first precipitation stage, with respect to the total amount of alumina formed on conclusion of stage c) of the preparation process, the said first precipitation stage being carried out at a temperature of between 10 and 50°C and for a period of time of between 2 minutes and 30 minutes;
a2'') a stage of heat treatment of the suspension heated at a temperature of between 50 and 200°C for a period of time of between 30 minutes and 5 hours, making it possible to obtain an alumina gel;
a3") a stage of filtration of the suspension obtained on conclusion of the heat treatment stage a2"), followed by at least one stage of washing the gel obtained;
a4") a stage of drying the alumina gel obtained on conclusion of stage a3") in order to obtain a powder;
a5") a stage of heat treatment of the powder obtained on conclusion of stage a4") at a temperature of between 500 and 1000°C, in the presence or absence of a stream of air containing up to 60% by volume of water, in order to obtain a calcined porous aluminium oxide.
